(19) Europäisches Patentamt
European Patent Office
Office européen des brevets

(11) **EP 4 426 015 A1**

(12) **EUROPEAN PATENT APPLICATION**
published in accordance with Art. 153(4) EPC

(43) Date of publication:
**04.09.2024 Bulletin 2024/36**

(21) Application number: **22903213.1**

(22) Date of filing: **24.11.2022**

(51) International Patent Classification (IPC):
**H04W 52/00** (2009.01)   **H04W 72/04** (2023.01)
**H04L 1/16** (2023.01)

(52) Cooperative Patent Classification (CPC):
**H04L 1/16; H04L 5/00; H04W 52/00; H04W 72/04;**
**H04W 72/044; H04W 72/0446; H04W 72/231**

(86) International application number:
**PCT/CN2022/133919**

(87) International publication number:
**WO 2023/103790 (15.06.2023 Gazette 2023/24)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **07.12.2021  CN 202111482615**

(71) Applicant: **Shanghai Tuiluo Communication**
**Technology**
**Partnership (Limited Partnership)**
**Shanghai 201203 (CN)**

(72) Inventors:
• **HU, Yang**
  **Shanghai 201206 (CN)**
• **ZHANG, Xiaobo**
  **Shanghai 201206 (CN)**

(74) Representative: **Zhang, Fan**
  **Am Quälenberg 3A**
  **38124 Braunschweig (DE)**

(54) **METHOD AND APPARATUS USED IN NODE FOR WIRELESS COMMUNICATION**

(57)   Disclosed in the present application are a method and apparatus used in a node for wireless communication. A first receiver receives first information, second information and first signaling, wherein the first signaling is used for indicating a first time-domain resource pool set, which comprises a plurality of time-domain resource pools. The first receiver receives a first PDSCH group, which comprises at least one PDSCH. A first transmitter sends a first PUCCH at a first sending power, the first PUCCH carrying at least one HARQ-ACK bit. At least one time-domain resource pool in the first time-domain resource pool set forms a feature time-domain resource pool subset, and the first information is used for determining the feature time-domain resource pool subset from the first time-domain resource pool set; and time-domain resource pools that are comprised in the feature time-domain resource pool subset respectively comprise time-domain resources, which are occupied by the PDSCH in the first PDSCH group.

FIG. 1

## Description

### TECHNICAL FIELD

The present application relates to transmission methods and devices in wireless communication systems, and in particular to a method and device for radio signal transmission in a wireless communication system supporting cellular networks.

### BACKGROUND

For wireless communications in high-frequency band, for instance, between 52.6GHz and 71 GHz, the 3GPP introduces a method in NR Release 17 for scheduling multiple Physical Downlink Shared CHannels (PDSCHs) with one Downlink Control Information (DCI) format.

### SUMMARY

For the above enhanced PDSCH scheduling, how to determine the transmission power of the corresponding PUCCH is a key issue to be solved.

To address the above problem, the present application provides a solution. It should be noted that in the description of the present application, communication in the HF band is used as a typical application scenario or example; the present application is equally applicable to other scenarios, such as multi-Transmission Reception Point (multi-TRP) transmission, Internet of Things (IoT), Multicast and Broadcast Services (MBS), Vehicle-to-Everything (V2X), non-terrestrial networks (NTN), etc., where similar technical results can be achieved. In addition, the adoption of a unified solution for different scenarios (including, but not limited to, communications in HF bands, URLLC, multi-TRP transmission, IoT, MBS, V2X or NTN) also helps to reduce the hardware complexity and cost, or to improve the performance. It should be noted that if no conflict is incurred, embodiments in any node in the present application and the characteristics of the embodiments are also applicable to any other node, and vice versa. What's more, the embodiments in the present application and the characteristics in the embodiments can be arbitrarily combined if there is no conflict.

In one embodiment, interpretations of the terminology in the present application refer to definitions given in the 3GPP TS36 series.

In one embodiment, interpretations of the terminology in the present application refer to definitions given in the 3GPP TS38 series.

In one embodiment, interpretations of the terminology in the present application refer to definitions given in the 3GPP TS37 series.

In one embodiment, interpretations of the terminology in the present application refer to definitions given in Institute of Electrical and Electronics Engineers (IEEE) protocol specifications.

The present application provides a method in a first node for wireless communications, comprising:

receiving first information, second information and a first signaling, the first signaling indicating a first time-domain resource pool set, the first time-domain resource pool set comprising multiple time-domain resource pools;

receiving a first PDSCH group, the first PDSCH group comprising at least one PDSCH; and

transmitting a first PUCCH with a first transmission power, the first PUCCH carrying at least one HARQ-ACK bit;

herein, a characteristic time-domain resource pool subset consists of at least one time-domain resource pool in the first time-domain resource pool set, the first information being used to determine the characteristic time-domain resource pool subset from the first time-domain resource pool set; each of the time-domain resource pool(s) in the characteristic time-domain resource pool subset comprises time-domain resources occupied by a PDSCH in the first PDSCH group; the first signaling comprises a first DAI field, and a value of the first DAI field in the first signaling and a first value are used together to determine the first transmission power, the first value being a positive integer; the second information is used to determine whether the first value is related to distribution of the time-domain resource pool(s) in the characteristic time-domain resource pool subset among the first time-domain resource pool set.

In one embodiment, an advantage of the above method includes: reducing the HARQ-ACK feedback overhead.

In one embodiment, an advantage of the above method includes: avoiding an unnecessary boost in transmission power.

In one embodiment, an advantage of the above method includes: saving transmission power.

In one embodiment, an advantage of the above method includes: improving spectral efficiency.

In one embodiment, an advantage of the above method includes: enhancing uplink transmission performance.

In one embodiment, an advantage of the above method includes: reducing interference.

In one embodiment, an advantage of the above method includes: having strong robustness.

In one embodiment, an advantage of the above method includes: requiring low effort for standard revision.

According to one aspect of the present application, the above method is characterized in that,

the second information is used to indicate a third value, the third value being a positive integer; when the third value is no greater than a reference value, the first value is equal to 1; when the third value is greater than a reference value, the distribution of the time-domain resource pool(s) in the characteristic time-domain resource pool subset among the first time-domain resource pool set and the third value are used together to determine the first value; the reference value is a positive integer.

In one embodiment, characteristics of the above method include: the first value relates to the distribution of the time-domain resource pool(s) in the characteristic time-domain resource pool subset among the first time-domain resource pool set only if the third value is greater than the reference value.

According to one aspect of the present application, the above method is characterized in that, when the third value is greater than the reference value: the third value is used to determine multiple time-domain resource pool subsets from the first time-domain resource pool set, among the multiple time-domain resource pool subsets each time-domain resource pool subset comprising at least one time-domain resource pool in the first time-domain resource pool set, the first value being equal to a number of time-domain resource pool subset(s) each comprising at least one time-domain resource pool belonging to the characteristic time-domain resource pool subset among the multiple time-domain resource pool subsets.

According to one aspect of the present application, the above method is characterized in that, when the third value is greater than the reference value: the first value is equal to a smallest one of the number of time-domain resource pool(s) included in the characteristic time-domain resource pool subset and the third value.

According to one aspect of the present application, the above method is characterized in that, the first information is used to determine types of time-domain symbols; when a given time-domain resource pool in the first time-domain resource pool set has an overlap with at least one time-domain symbol of which the type is uplink symbol, the given time-domain resource pool does not belong to the characteristic time-domain resource pool subset.

According to one aspect of the present application, the above method is characterized in that, the first information is used to determine types of time-domain symbols; when a given time-domain resource pool in the first time-domain resource pool set comprises at least one time-domain symbol of which the type is uplink symbol, the given time-domain resource pool does not belong to the characteristic time-domain resource pool subset.

According to one aspect of the present application, the above method is characterized in that, a target bit number is used to determine the first transmission power, the value of the first DAI field in the first signaling and the first value being used together to determine the target bit number.

According to one aspect of the present application, the above method is characterized in that, the target bit number is used to determine a target amount of adjustment, the target amount of adjustment being used to determine a target transmission power, the first transmission power being equal to a smaller value between an upper-limit transmission power and the target transmission power, the upper-limit transmission power being default or configurable.

The present application provides a method in a second node for wireless communications, comprising:

transmitting first information, second information and a first signaling, the first signaling indicating a first time-domain resource pool set, the first time-domain resource pool set comprising multiple time-domain resource pools;
transmitting a first PDSCH group, the first PDSCH group comprising at least one PDSCH; and
receiving a first PUCCH transmitted with a first transmission power, the first PUCCH carrying at least one HARQ-ACK bit;

herein, a characteristic time-domain resource pool subset consists of at least one time-domain resource pool in the first time-domain resource pool set, the first information being used to determine the characteristic time-domain resource pool subset from the first time-domain resource pool set; each of the time-domain resource pool(s) in the characteristic time-domain resource pool subset comprises time-domain resources occupied by a PDSCH in the first PDSCH group; the first signaling comprises a first DAI field, and a value of the first DAI field in the first signaling and a first value are used together to determine the first transmission power, the first value being a positive integer; the second information is used to determine whether the first value is related to distribution of the time-domain resource pool(s) in the characteristic time-domain resource pool subset among the first time-domain resource pool set.

According to one aspect of the present application, the above method is characterized in that, the second information is used to indicate a third value, the third value being a positive integer; when the third value is no greater than a reference value, the first value is equal to 1; when the third value is greater than a reference value, the distribution of the time-domain resource pool(s) in the characteristic time-domain resource pool subset among the first time-domain resource pool set and the third value are used together to determine the first value; the reference value is a positive integer.

According to one aspect of the present application, the above method is characterized in that, when the third value is greater than the reference value: the third value is used to determine multiple time-domain resource pool subsets from the first time-domain resource pool set, among the multiple time-domain resource pool subsets each time-domain resource pool subset comprising at least one time-domain resource pool in the first time-domain resource pool set, the first value being equal to a number of time-domain resource pool subset(s) each comprising at least one time-domain resource pool belonging to the characteristic time-domain resource pool subset among the multiple time-domain resource pool subsets.

According to one aspect of the present application, the above method is characterized in that,
when the third value is greater than the reference value: the first value is equal to a smallest one of the number of time-domain resource pool(s) included in the characteristic time-domain resource pool subset and the third value.

According to one aspect of the present application, the above method is characterized in that,
the first information is used to determine types of time-domain symbols; when a given time-domain resource pool in the first time-domain resource pool set has an overlap with at least one time-domain symbol of which the type is uplink symbol, the given time-domain resource pool does not belong to the characteristic time-domain resource pool subset.

According to one aspect of the present application, the above method is characterized in that,
the first information is used to determine types of time-domain symbols; when a given time-domain resource pool in the first time-domain resource pool set comprises at least one time-domain symbol of which the type is uplink symbol, the given time-domain resource pool does not belong to the characteristic time-domain resource pool subset.

According to one aspect of the present application, the above method is characterized in that,
a target bit number is used to determine the first transmission power, the value of the first DAI field in the first signaling and the first value being used together to determine the target bit number.

According to one aspect of the present application, the above method is characterized in that,
the target bit number is used to determine a target amount of adjustment, the target amount of adjustment being used to determine a target transmission power, the first transmission power being equal to a smaller value between an upper-limit transmission power and the target transmission power, the upper-limit transmission power being default or configurable.

The present application provides a first node for wireless communications, comprising:

a first receiver, receiving first information, second information and a first signaling, the first signaling indicating a first time-domain resource pool set, the first time-domain resource pool set comprising multiple time-domain resource pools;
the first receiver, receiving a first PDSCH group, the first PDSCH group comprising at least one PDSCH; and

a first transmitter, transmitting a first PUCCH with a first transmission power, the first PUCCH carrying at least one HARQ-ACK bit;
herein, a characteristic time-domain resource pool subset consists of at least one time-domain resource pool in the first time-domain resource pool set, the first information being used to determine the characteristic time-domain resource pool subset from the first time-domain resource pool set; each of the time-domain resource pool(s) in the characteristic time-domain resource pool subset comprises time-domain resources occupied by a PDSCH in the first PDSCH group; the first signaling comprises a first DAI field, and a value of the first DAI field in the first signaling and a first value are used together to determine the first transmission power, the first value being a positive integer; the second information is used to determine whether the first value is related to distribution of the time-domain resource pool(s) in the characteristic time-domain resource pool subset among the first time-domain resource pool set.

The present application provides a second node for wireless communications, comprising:

a second transmitter, transmitting first information, second information and a first signaling, the first signaling indicating a first time-domain resource pool set, the first time-domain resource pool set comprising multiple time-domain resource pools;
the second transmitter, transmitting a first PDSCH group, the first PDSCH group comprising at least one PDSCH;
a second receiver, receiving a first PUCCH transmitted with a first transmission power, the first PUCCH carrying at least one HARQ-ACK bit;
herein, a characteristic time-domain resource pool subset consists of at least one time-domain resource pool in the first time-domain resource pool set, the first information being used to determine the characteristic time-domain resource pool subset from the first time-domain resource pool set; each of the time-domain resource pool(s) in the characteristic time-domain resource pool subset comprises time-domain resources occupied by a PDSCH in the first PDSCH group; the first signaling comprises a first DAI field, and a value of the first DAI field in the first signaling and a first value are used together to determine the first transmission power, the first value being a positive integer; the second information is used to determine whether the first value is related to distribution of the time-domain resource pool(s) in the characteristic time-domain resource pool subset among the first time-domain resource pool set.

The present application provides a method in a first node for wireless communications, comprising:

receiving first information, second information and a first signaling, the first signaling indicating a first time-domain resource pool set, the first time-domain resource pool set comprising multiple time-domain resource pools;

receiving a first PDSCH group, the first PDSCH group comprising at least one PDSCH; and

transmitting a first PUCCH with a first transmission power, the first PUCCH carrying at least one HARQ-ACK bit;

herein, for a given time-domain resource pool in the first time-domain resource pool set, the first information is used to determine whether the first PDSCH group comprises a PDSCH corresponding to the given time-domain resource pool; the first signaling comprises a first DAI field, the value of the first DAI field in the first signaling and a first value being used together to determine the first transmission power, the first value being a positive integer; the second information is used to determine whether the first value is related to a number of PDSCH(s) included in the first PDSCH group.

In one embodiment, the statement that "the second information is used to determine whether the first value is related to a number of PDSCHs included in the first PDSCH group" in the present application and "the second information is used to indicate a third value, the third value being a positive integer, the first value being equal to a smallest one of the number of PDSCH(s) included in the first PDSCH group and the third value" are equivalent or interchangeable.

In one embodiment, the given time-domain resource pool is any time-domain resource pool in the first time-domain resource pool set.

In one embodiment, the given time-domain resource pool is a time-domain resource pool that is reserved to a corresponding PDSCH.

In one embodiment, the given time-domain resource pool comprises time-domain resources that are reserved to a corresponding PDSCH.

In one embodiment, for a given time-domain resource pool in the first time-domain resource pool set, the first information is used to indicate a PDSCH included in the first PDSCH group corresponding to the given time-domain resource pool.

In one embodiment, the first PDSCH group consists of at least one PDSCH (respectively) corresponding to at least one time-domain resource pool in the first time-domain resource pool set.

In one embodiment, each PDSCH in the first PDSCH group corresponds to one time-domain resource pool in the first time-domain resource pool set.

In one embodiment, the first information is used to determine a number of PDSCH(s) comprised in the first PDSCH group.

In one embodiment, an advantage of the above method includes: reducing the HARQ-ACK feedback overhead.

In one embodiment, an advantage of the above method includes: avoiding an unnecessary boost in transmission power.

In one embodiment, an advantage of the above method includes: saving transmission power.

In one embodiment, an advantage of the above method includes: improving spectral efficiency.

In one embodiment, an advantage of the above method includes: enhancing uplink transmission performance.

In one embodiment, an advantage of the above method includes: reducing interference.

In one embodiment, an advantage of the above method includes: having strong robustness.

In one embodiment, an advantage of the above method includes: requiring low effort for standard revision.

According to one aspect of the present application, the above method is characterized in that,

the second information is used to indicate a third value, the third value being a positive integer; when the third value is no greater than a reference value, the first value is equal to 1; when the third value is greater than a reference value, a number of PDSCH(s) included in the first PDSCH group and the third value are used together to determine the first value; the reference value is a positive integer.

In one embodiment, the statement that "a number of PDSCH(s) included in the first PDSCH group and the third value are used together to determine the first value" in the present application and "the first value being equal to a smallest one of the number of PDSCH(s) included in the first PDSCH group and the third value" are equivalent or interchangeable.

According to one aspect of the present application, the above method is characterized in that,

when the third value is greater than the reference value: the first value is equal to a smallest one of the number of PDSCH(s) included in the first PDSCH group and the third value.

According to one aspect of the present application, the above method is characterized in that,

the first information is used to determine types of time-domain symbols; when a given time-domain resource pool in the first time-domain resource pool set has an overlap with at least one time-domain symbol of which the type is uplink symbol, the first PDSCH group does not include a PDSCH corresponding to the given time-domain resource pool.

In one embodiment, a time-domain resource pool in the first time-domain resource pool set corresponding to any PDSCH belonging to the first PDSCH group does not overlap with any time-domain symbol of which the type is uplink symbol.

In one embodiment, when a given time-domain resource pool in the first time-domain resource pool set does not overlap with any time-domain symbol of which the type is uplink symbol, a PDSCH corresponding to the given time-domain resource pool belongs to the first PDSCH group.

In one embodiment, the first information is used to determine types of time-domain symbols; for a given time-domain resource pool in the first time-domain resource pool set, the type of time-domain symbols comprised in the given time-domain resource pool is used to determine whether the first PDSCH group comprises a PDSCH corresponding to the given time-domain resource pool.

According to one aspect of the present application, the above method is characterized in that, the first information is used to determine types of time-domain symbols; when a given time-domain resource pool in the first time-domain resource pool set comprises at least one time-domain symbol of which the type is uplink symbol, the first PDSCH group does not include a PDSCH corresponding to the given time-domain resource pool.

In one embodiment, when a given time-domain resource pool in the first time-domain resource pool set does not comprise any time-domain symbol of which the type is uplink symbol, a PDSCH corresponding to the given time-domain resource pool belongs to the first PDSCH group.

In one embodiment, a time-domain resource pool in the first time-domain resource pool set corresponding to any PDSCH belonging to the first PDSCH group does not comprise any time-domain symbol of which the type is uplink symbol.

According to one aspect of the present application, the above method is characterized in that, a target bit number is used to determine the first transmission power, the value of the first DAI field in the first signaling and the first value being used together to determine the target bit number.

According to one aspect of the present application, the above method is characterized in that, the target bit number is used to determine a target amount of adjustment, the target amount of adjustment being used to determine a target transmission power, the first transmission power being equal to a smaller value between an upper-limit transmission power and the target transmission power, the upper-limit transmission power being default or configurable.

The present application provides a method in a second node for wireless communications, comprising:

transmitting first information, second information and a first signaling, the first signaling indicating a first time-domain resource pool set, the first time-domain resource pool set comprising multiple time-domain resource pools;
transmitting a first PDSCH group, the first PDSCH group comprising at least one PDSCH; and
receiving a first PUCCH transmitted with a first transmission power, the first PUCCH carrying at least one HARQ-ACK bit;
herein, for a given time-domain resource pool in the first time-domain resource pool set, the first information is used to determine whether the first PDSCH group comprises a PDSCH corresponding to the given time-domain resource pool; the first signaling comprises a first DAI field, the value of the first DAI field in the first signaling and a first value being used together to determine the first transmission power, the first value being a positive integer; the second information is used to determine whether the first value is related to a number of PDSCH(s) included in the first PDSCH group.

According to one aspect of the present application, the above method is characterized in that, the second information is used to indicate a third value, the third value being a positive integer; when the third value is no greater than a reference value, the first value is equal to 1; when the third value is greater than a reference value, a number of PDSCH(s) included in the first PDSCH group and the third value are used together to determine the first value; the reference value is a positive integer.

According to one aspect of the present application, the above method is characterized in that, when the third value is greater than the reference value: the first value is equal to a smallest one of the number of PDSCH(s) included in the first PDSCH group and the third value.

According to one aspect of the present application, the above method is characterized in that, the first information is used to determine types of time-domain symbols; when a given time-domain resource pool in the first time-domain resource pool set has an overlap with at least one time-domain symbol of which the type is uplink symbol, the first PDSCH group does not include a PDSCH corresponding to the given time-domain resource pool.

According to one aspect of the present application, the above method is characterized in that, the first information is used to determine types of time-domain symbols; when a given time-domain resource pool in the first time-domain resource pool set comprises at least one time-domain symbol of which the type is uplink symbol, the first PDSCH group does not include a PDSCH corresponding to the given time-domain resource pool.

According to one aspect of the present application, the above method is characterized in that, a target bit number is used to determine the first transmission power, the value of the first DAI field in the first signaling and the first value being used together to determine the target bit number.

According to one aspect of the present application, the above method is characterized in that, the target bit number is used to determine a target amount of adjustment, the target amount of adjustment being used to determine a target transmission power, the first transmission power being equal to a smaller value between an upper-limit transmission power and the target transmission power, the upper-limit transmission power being default or configurable.

The present application provides a first node for wireless communications, comprising:

a first receiver, receiving first information, second information and a first signaling, the first signaling indicating a first time-domain resource pool set, the first time-domain resource pool set comprising multiple time-domain resource pools;
the first receiver, receiving a first PDSCH group, the first PDSCH group comprising at least one PDSCH; and
a first transmitter, transmitting a first PUCCH with a first transmission power, the first PUCCH carrying at least one HARQ-ACK bit;
herein, for a given time-domain resource pool in the first time-domain resource pool set, the first information is used to determine whether the first PDSCH group comprises a PDSCH corresponding to the given time-domain resource pool; the first signaling comprises a first DAI field, the value of the first DAI field in the first signaling and a first value being used together to determine the first transmission power, the first value being a positive integer; the second information is used to determine whether the first value is related to a number of PDSCH(s) included in the first PDSCH group.

According to one aspect of the present application, the above device is characterized in that, the second information is used to indicate a third value, the third value being a positive integer; when the third value is no greater than a reference value, the first value is equal to 1; when the third value is greater than a reference value, a number of PDSCH(s) included in the first PDSCH group and the third value are used together to determine the first value; the reference value is a positive integer.

According to one aspect of the present application, the above device is characterized in that, when the third value is greater than the reference value: the first value is equal to a smallest one of the number of PDSCH(s) included in the first PDSCH group and the third value.

According to one aspect of the present application, the above device is characterized in that, the first information is used to determine types of time-domain symbols; when a given time-domain resource pool in the first time-domain resource pool set has an overlap with at least one time-domain symbol of which the type is uplink symbol, the first PDSCH group does not include a PDSCH corresponding to the given time-domain resource pool.

According to one aspect of the present application, the above device is characterized in that, the first information is used to determine types of time-domain symbols; when a given time-domain resource pool in the first time-domain resource pool set comprises at least one time-domain symbol of which the type is uplink symbol, the first PDSCH group does not include a PDSCH corresponding to the given time-domain resource pool.

According to one aspect of the present application, the above device is characterized in that, a target bit number is used to determine the first transmission power, the value of the first DAI field in the first signaling and the first value being used together to determine the target bit number.

According to one aspect of the present application, the above device is characterized in that, the target bit number is used to determine a target amount of adjustment, the target amount of adjustment being used to determine a target transmission power, the first transmission power being equal to a smaller value between an upper-limit transmission power and the target transmission power, the upper-limit transmission power being default or configurable.

The present application provides a second node for wireless communications, comprising:

a second transmitter, transmitting first information, second information and a first signaling, the first signaling indicating a first time-domain resource pool set, the first time-domain resource pool set comprising multiple time-domain resource pools;
the second transmitter, transmitting a first PDSCH group, the first PDSCH group comprising at least one PDSCH;
a second receiver, receiving a first PUCCH transmitted with a first transmission power, the first PUCCH carrying at least one HARQ-ACK bit;
herein, for a given time-domain resource pool in the first time-domain resource pool set, the first information is used to determine whether the first PDSCH group comprises a PDSCH corresponding to the given time-domain resource pool; the first signaling comprises a first DAI field, the value of the first DAI field in the first signaling and a first value being used together to determine the first transmission power, the first value being a positive integer; the second information is used to determine whether the first value is related to a number of PDSCH(s) included in the first PDSCH group.

In one embodiment, the method in the present application has the following advantages:

- Conservation of transmission power;
- Improved spectral efficiency;
- Enhanced uplink transmission performance;
- Reduced interference;
- Less effort required for standard revision.

## BRIEF DESCRIPTION OF THE DRAWINGS

Other features, objects and advantages of the present application will become more apparent from the detailed description of non-restrictive embodiments taken in conjunction with the following drawings:

FIG. 1 illustrates a flowchart of processing of a first node according to one embodiment of the present application.

FIG. 2 illustrates a schematic diagram of a network architecture according to one embodiment of the present application.

FIG. 3 illustrates a schematic diagram of a radio protocol architecture of a user plane and a control plane according to one embodiment of the present application.

FIG. 4 illustrates a schematic diagram of a first communication device and a second communication device according to one embodiment of the present application.

FIG. 5 illustrates a flowchart of signal transmission according to one embodiment of the present application.

FIG. 6 illustrates a schematic diagram of a relation between a third value and a first value according to one embodiment of the present application.

FIG. 7 illustrates a schematic diagram of relations among a first time-domain resource pool set, a characteristic time-domain resource pool subset, and multiple time-domain resource pool subsets according to one embodiment of the present application.

FIG. 8 illustrates a schematic diagram explaining a first value according to one embodiment of the present application.

FIG. 9 illustrates a schematic diagram of relations among first information, a given time-domain resource pool and a characteristic time-domain resource pool subset according to one embodiment of the present application.

FIG. 10 illustrates a schematic diagram of relations among the value of a first DAI field in a first signaling, a second value, a target bit number and a first transmission power according to one embodiment of the present application.

FIG. 11 illustrates a schematic diagram of relations among a first value, a target bit number and a first transmission power according to one embodiment of the present application.

FIG. 12 illustrates a schematic diagram of relations among a target bit number, a first UCI bit number, a first resource size and a target amount of adjustment according to one embodiment of the present application.

FIG. 13 illustrates a schematic diagram of relations among a target bit number, a target amount of adjustment and a target transmission power according to one embodiment of the present application.

FIG. 14 illustrates a schematic diagram of relations among a first transmission power, a target transmission power and a target amount of adjustment according to one embodiment of the present application.

FIG. 15 illustrates a schematic diagram explaining a first signaling according to one embodiment of the present application.

FIG. 16 illustrates a structure block diagram of a processing device in a first node according to one embodiment of the present application.

FIG. 17 illustrates a structure block diagram of a processing device in a second node according to one embodiment of the present application.

## DESCRIPTION OF THE EMBODIMENTS

The technical scheme of the present application is described below in further details in conjunction with the drawings. It should be noted that the embodiments of the present application and the characteristics of the embodiments may be arbitrarily combined if no conflict is caused.

### Embodiment 1

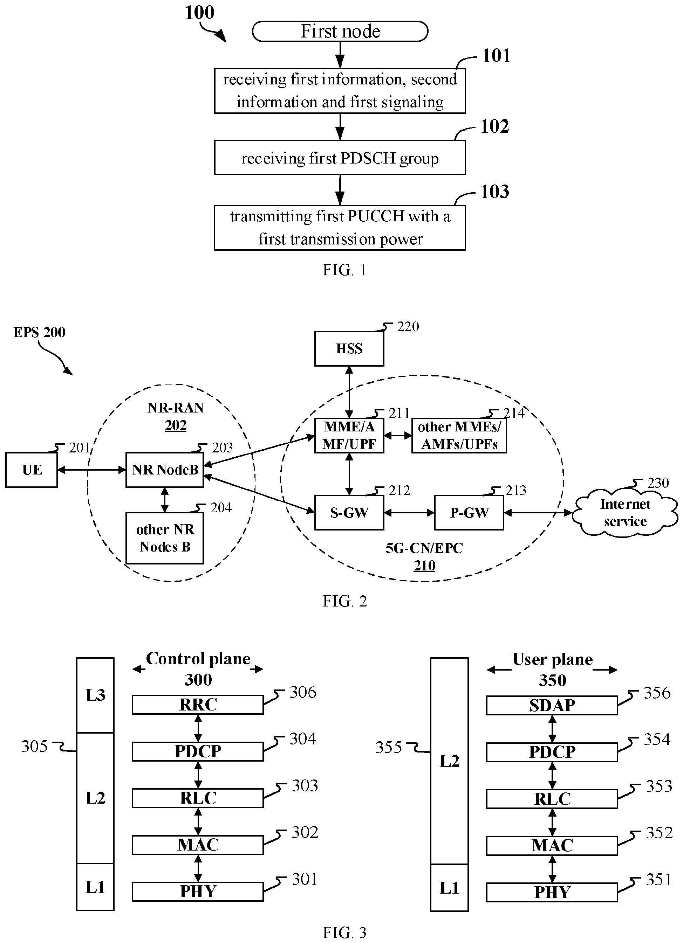

Embodiment 1 illustrates a flowchart of processing of a first node according to one embodiment of the present application, as shown in FIG. 1.

In Embodiment 1, the first node in the present application receives first information, second information and a first signaling in step 101; receives a first PDSCH group in step 102; and transmits a first PUCCH with a first transmission power in step 103.

In Embodiment 1, the first signaling indicates a first time-domain resource pool set, the first time-domain resource pool set comprising multiple time-domain resource pools; the first PDSCH group comprises at least one PDSCH; the first PUCCH carries at least one HARQ-ACK bit; a characteristic time-domain resource pool subset consists of at least one time-domain resource pool in the first time-domain resource pool set, the first information being used to determine the characteristic time-domain resource pool subset from the first time-domain resource pool set; each of the time-domain resource pool(s) in the characteristic time-domain resource pool subset comprises time-domain resources occupied by a PDSCH in the first PDSCH group; the first signaling comprises a first DAI field, and a value of the first DAI field in the first signaling and a first value are used together to determine the first transmission power, the first value being a positive integer; the second information is used to determine whether the first value is related to distribution of the time-domain resource pool(s) in the characteristic time-domain resource pool subset among the first time-domain resource pool set.

In one embodiment, the first information is received before the second information.

In one embodiment, the first information is received after the second information.

In one embodiment, the first information and the second information are received simultaneously.

In one embodiment, both the first information and the second information are received before the first signaling.

In one embodiment, at least one of the first information or the second information is received no later than the first signaling.

In one embodiment, the first information is a physical layer signaling.

In one embodiment, the first information is a higher layer signaling.

In one embodiment, the first information is an RRC signaling.

In one embodiment, the first information comprises one or more fields in an RRC signaling.

In one embodiment, the first information comprises one Information Element (IE).

In one embodiment, the first information comprises one or more IEs.

In one embodiment, the first information comprises one or more fields in an IE.

In one embodiment, the first information is a Medium Access Control layer Control Element (MAC CE) signaling.

In one embodiment, the first information comprises one or more fields in a MAC CE signaling.

In one embodiment, a name of the first information includes TDD-UL-DL (case insensitive).

In one embodiment, the first information comprises one or more fields in an RRC message SIB1.

In one embodiment, the first information comprises information that indicates time-domain resource allocation.

In one embodiment, the first information comprises information that indicates uplink and downlink resource allocation.

In one embodiment, the first information comprises information that indicates TDD UL/DL configuration.

In one embodiment, the first information comprises at least one of tdd-UL-DL-ConfigurationCommon or tdd-UL-DL-ConfigurationDedicated.

In one embodiment, the first information is a parameter tdd-UL-DL-ConfigurationCommon.

In one embodiment, the first information is a parameter tdd-UL-DL-ConfigurationDedicated.

In one embodiment, the first information comprises a field that includes tdd-UL-DL in its name.

In one embodiment, the first information comprises a field that includes tdd-UL-DL-Configuration in its name.

In one embodiment, the first information comprises an information element (IE) ServingCellConfig-Common.

In one embodiment, the first information comprises an information element (IE) ServingCellConfig.

In one embodiment, the first information comprises an ssb-PositionsInBurst.

In one embodiment, the second information is a physical layer signaling.

In one embodiment, the second information is a higher layer signaling.

In one embodiment, the second information is an RRC signaling.

In one embodiment, the second information comprises one or more fields in an RRC signaling.

In one embodiment, the second information comprises one Information Element (IE).

In one embodiment, the second information comprises one or more IEs.

In one embodiment, the second information comprises one or more fields in an IE.

In one embodiment, the second information is a Medium Access Control layer Control Element (MAC CE) signaling.

In one embodiment, the second information comprises one or more fields in a MAC CE signaling.

In one embodiment, the second information is information being used to determine the division of groups.

In one embodiment, the second information is information being used to indicate at least one group.

In one embodiment, the second information is used to indicate 1 or 2 or 4 groups.

In one embodiment, the group indicated by the second information is a group used for HARQ-ACK information generation.

In one embodiment, the group indicated by the second information refers to: a transport block group.

In one embodiment, the group indicated by the second information refers to: a PDSCH group.

In one embodiment, the group indicated by the second information refers to: a group used for performing HARQ-ACK bit bundling.

In one embodiment, the second information comprises a numberOfHARQ-BundlingGroups.

In one embodiment, the second information includes at least one of Bundling or Groups in its name.

In one embodiment, the first signaling is a physical layer signaling.

In one embodiment, the first signaling is a Downlink control information (DCI) format.

In one embodiment, the first signaling is a DCI format 1_0.

In one embodiment, the first signaling is a DCI format 1_1.

In one embodiment, the first signaling is a DCI format 1_2.

In one embodiment, the first signaling is one of a DCI format 1_1 or a DCI format 0_2.

In one embodiment, the first signaling is DCI format 1_0, for the specific definition of the DCI format 1_0, refer to 3GPP TS38.212, Chapter 7.3.1.2.

In one embodiment, the first signaling is DCI format 1_1, for the specific definition of the DCI format 1_1, refer to 3GPP TS38.212, Chapter 7.3.1.2.

In one embodiment, the first signaling is DCI format 1_2, for the specific definition of the DCI format 1_2, refer to 3GPP TS38.212, Chapter 7.3.1.2.

In one embodiment, the first signaling comprises one or more fields in a DCI format.

In one embodiment, the first signaling is a DownLink Grant Signaling.

In one embodiment, the first signaling is a higher layer signaling.

In one embodiment, the first signaling is an RRC signaling.

In one embodiment, the first signaling comprises one or more fields in an RRC signaling.

In one embodiment, the first signaling comprises one Information Element (IE).

In one embodiment, the first signaling comprises one or more fields in an IE.

In one embodiment, the first signaling is a Medium Access Control layer Control Element (MAC CE) signaling.

In one embodiment, the first signaling comprises one or more fields in a MAC CE signaling.

In one embodiment, the first node does not indicate a type2-HARQ-ACK-Codebook.

In one embodiment, the first node receives up to one DCI format in a PDCCH monitoring occasion for a serving cell.

In one embodiment, the first signaling is used to indicate time-domain resources occupied by each time-domain resource pool in the first time-domain resource pool set.

In one embodiment, the first signaling explicitly indicates the first time-domain resource pool set.

In one embodiment, the first signaling implicitly indicates the first time-domain resource pool set.

In one embodiment, the first signaling indicates at least one Start and length indicator value (SLIV), the at least one SLIV (respectively) corresponding to at least one time-domain resource pool in the first time-domain resource pool set.

In one embodiment, a given SLIV of the at least one SLIV corresponds to a given time-domain resource pool in the first time-domain resource pool set; the given SLIV and the given time-domain resource pool meeting the following conditions:

If (L - 1) ≤ 7, then the given SLIV=14 · (L - 1) + S; otherwise, the given SLIV=14 · (14 - L + 1) + (14 - 1 - S); where 0< L ≤ 14 - S, and the S and the L denote an index of a starting time-domain symbol of the given time-domain resource pool and a number of consecutive time-domain symbols occupied by the given time-domain resource pool, respectively.

In one embodiment, the time-domain symbol in the present application is a Single Carrier- Frequency Division Multiple Access (SC-FDMA) symbol.

In one embodiment, the time-domain symbol in the present application is a Discrete Fourier Transform Spread OFDM (DFT-S-OFDM) symbol.

In one embodiment, the time-domain symbol in the present application is a Filter Bank Multi Carrier (FBMC) symbol.

In one embodiment, the time-domain symbol in the present application comprises a Cyclic Prefix (CP).

In one embodiment, the given SLIV is any one of the at least one SLIV

In one embodiment, the first signaling indicates a starting time-domain symbol of and a number of consecutive time-domain symbols occupied by at least one time-domain resource pool in the first time-domain resource pool set.

In one embodiment, the first signaling indicates a slot to which at least one time-domain resource pool in the first time-domain resource pool set belongs.

In one embodiment, the first signaling indicates at least one slot offset value, each of the at least one slot offset value being a slot offset value between a slot to which the first signaling belongs in time domain and a slot to which one time-domain resource pool in the first time-domain resource pool set belongs.

In one embodiment, a first set of rows comprises a plurality of rows, each row in the first set of rows comprising at least one resource allocation item; the first signaling comprises a first field, the value of the first field in the first signaling being mapped to a target row in the first set of rows, the target row comprises a plurality of resource allocation items, each of the resource allocation items in the target row respectively indicating a time-domain resource pool in the first time-domain resource pool set.

In one embodiment, the first set of rows is a list used for time-domain resource allocation.

In one embodiment, the first set of rows is configured by an information element (IE) PDSCH-TimeDomainResourceAllocationList.

In one embodiment, one said resource allocation item comprises an indication field for at least one of {slot offset value, mapping type, SLIV}.

In one embodiment, the first field comprises at least one bit.

In one embodiment, the first field is a field that is used to indicate resource allocation.

In one embodiment, the first field is a Time domain resource assignment field.

In one embodiment, time-domain resource pools in the first time-domain resource pool set respectively belong to different slots.

In one embodiment, there are two time-domain resource pools in the first time-domain resource pool set that belong to a same slot.

In one embodiment, each time-domain resource pool in the first time-domain resource pool set comprises at least one time-domain symbol.

In one embodiment, any two time-domain resource pools in the first time-domain resource pool set have no overlap in time domain.

In one embodiment, the expression "receiving a first PDSCH group" comprises: receiving a bit block in each PDSCH of the first PDSCH group.

In one embodiment, the expression "receiving a first PDSCH group" comprises: receiving at least one transport block (TB) in each PDSCH of the first PDSCH group.

In one embodiment, the expression "receiving a first PDSCH group" comprises: performing decoding of a signal received in each PDSCH of the first PDSCH group.

In one embodiment, the expression "receiving a first PDSCH group" comprises: performing decoding of signals received in each PDSCH of the first PDSCH group separately.

In one embodiment, the first PUCCH is a Physical Uplink Control CHannel (PUCCH).

In one embodiment, all time-domain resources occupied by any PDSCH in the first PDSCH group belong to a same time-domain resource pool in the first time-domain resource pool set.

In one embodiment, the expression "transmitting a first PUCCH" comprises: transmitting a signal carrying Uplink control information (UCI) bits in the first PUCCH.

In one embodiment, the expression "transmitting a first PUCCH" comprises: transmitting a signal carrying at least HARQ-ACK bit(s) in the first PUCCH.

In one embodiment, the expression "transmitting a first PUCCH" comprises: transmitting UCI bits in the first PUCCH.

In one embodiment, the expression "transmitting a first PUCCH" comprises: transmitting at least HARQ-ACK bit(s) in the first PUCCH.

In one embodiment, an output by at least one UCI bit after being through at least part of CRC attachment, Code block segmentation, Code block CRC attachment, Channel coding, Rate matching, Code block concatenation, Scrambling, Modulation, Layer mapping, Transform precoding, Precoding, Resource block mapping, Multicarrier symbol generation, and Modulation and Upconversion is transmitted in the first PUCCH.

In one embodiment, an output by at least one UCI bit after being through at least part of CRC attachment, Code block segmentation, Code block CRC attachment, Channel coding, Rate matching, Code block concatenation, Scrambling, Modulation, Spreading, Mapping to physical resources, Multicarrier symbol generation, and Modulation and Upconversion is transmitted in the first PUCCH.

In one embodiment, an output by at least one UCI bit after being through at least part of CRC attachment, Code block segmentation, Code block CRC attachment, Channel coding, Rate matching, Code block concatenation, Scrambling, Modulation, Block-wise spreading, Transform precoding, Mapping to physical resources, Multicarrier symbol generation, and Modulation and Upconversion is transmitted in the first PUCCH.

In one embodiment, the HARQ-ACK bit(s) in the present application belongs/belong to the UCI bits in the present application.

In one embodiment, the HARQ-ACK bit(s) in this application is/are HARQ-ACK information bit(s).

In one embodiment, the first PUCCH carries at least 3 UCI bits.

In one embodiment, a total number of UCI bits carried by the first PUCCH is not greater than 2.

In one embodiment, a total number of UCI bits carried by the first PUCCH is not less than 2.

In one embodiment, a total number of UCI bits carried by the first PUCCH is greater than 2 and not greater than 11.

In one embodiment, a total number of UCI bits carried by the first PUCCH is not greater than 11.

In one embodiment, a total number of UCI bits carried by the first PUCCH is greater than 11.

In one embodiment, the first value corresponds to the first signaling.

In one embodiment, the first value is associated with the first signaling.

In one embodiment, the first value is associated with the scheduling of the first signaling.

In one embodiment, the first value is determined with respect to a PDCCH monitoring occasion m0 as well as a serving cell c0, and the first signaling is being detected in the PDCCH monitoring occasion m0 with respect to the serving cell c0; the m0 and c0 denote an index of PDCCH monitoring occasion and an index of serving cell, respectively.

In one embodiment, the first value is equal to a number of HARQ-ACK bits generated for the scheduling of the first signaling.

In one embodiment, the first value is equal to a number of HARQ-ACK bits generated for the scheduling of the first signaling that are used to obtain the PUCCH transmission power.

In one embodiment, the first node does not receive a DCI format other than the first signaling indicating the transmitting of HARQ-ACK bit(s) in a slot to which the first PUCCH belongs in time domain.

In one embodiment, the DCI format received by the first node indicating the transmitting of HARQ-ACK bit(s) in a slot to which the first PUCCH belongs includes only the first signaling.

In one embodiment, the first information is used together with other RRC signaling or MAC CE signaling to determine the characteristic time-domain resource pool subset from the first time-domain resource pool set.

In one embodiment, the first information is used to indicate the characteristic time-domain resource pool subset from the first time-domain resource pool set.

In one embodiment, the first information is used to indicate a time-domain resource pool from the first time-domain resource pool set that is not part of the characteristic time-domain resource pool subset.

In one embodiment, the first information is used to determine at least one time-domain resource pool from the first time-domain resource pool set, the at least one time-domain resource pool constituting the characteristic time-domain resource pool subset.

In one embodiment, the first information explicitly indicates time-domain resource pool(s) constituting the characteristic time-domain resource pool subset from the first time-domain resource pool set.

In one embodiment, the first information implicitly indicates time-domain resource pool(s) constituting the characteristic time-domain resource pool subset from the first time-domain resource pool set.

In one embodiment, the statement "the first information being used to determine the characteristic time-domain resource pool subset from the first time-domain resource pool set" in the present application and "the first information is used to determine the number of PDSCH(s) included in the first PDSCH group" are equivalent or interchangeable.

In one embodiment, the statement "the first information being used to determine the characteristic time-domain resource pool subset from the first time-domain resource pool set" in the present application comprises that the first information is used to determine the number of time-domain resource pools included in the characteristic time-domain resource pool subset.

In one embodiment, in terms of time domain, PDSCHs in the first PDSCH group are respectively received in each time-domain resource pool included in the characteristic time-domain resource pool subset.

In one embodiment, time-domain resource pools included in the characteristic time-domain resource pool subset correspond to PDSCHs in the first PDSCH group respectively.

In one embodiment, each time-domain resource pool included in the characteristic time-domain resource pool subset is time-domain resources occupied by a PDSCH in the first PDSCH group.

In one embodiment, a number of time-domain resource pools included in the characteristic time-domain resource pool subset is equal to a number of PDSCHs included in the first PDSCH group.

In one embodiment, a number of time-domain resource pools included in the characteristic time-domain resource pool subset is no greater than a number of PDSCHs included in the first PDSCH group.

In one embodiment, each PDSCH in the first PDSCH group is used for carrying only one transport block (TB).

In one embodiment, each PDSCH in the first PDSCH group is used for carrying up to one transport block (TB).

In one embodiment, each PDSCH in the first PDSCH group is used for carrying up to 2 TBs.

In one embodiment, the first time-domain resource pool set comprises at least 2 time-domain resource pools.

In one embodiment, the first time-domain resource pool set comprises at least 3 time-domain resource pools.

In one embodiment, the first time-domain resource pool set comprises at least 4 time-domain resource pools.

In one embodiment, the first time-domain resource pool set comprises at least 5 time-domain resource pools.

In one embodiment, the first time-domain resource pool set comprises at least 6 time-domain resource pools.

In one embodiment, the first time-domain resource pool set comprises at least 7 time-domain resource pools.

In one embodiment, the first time-domain resource pool set comprises at least 8 time-domain resource pools.

In one embodiment, the first DAI field is a Downlink assignment index (DAI) field.

In one embodiment, the first DAI field is a counter DAI field.

In one embodiment, the first DAI field is a total DAI field.

In one embodiment, the first DAI field comprises 1 bit.

In one embodiment, the first DAI field comprises 2 bits.

In one embodiment, the first DAI field comprises 3 bits.

In one embodiment, the first DAI field comprises 4 bits.

In one embodiment, the first DAI field comprises no more than 32 bits.

In one embodiment, a sum of the value of the first DAI field in the first signaling and the first value indicates the first transmission power.

In one embodiment, a product of the value of the first DAI field in the first signaling and the first value indicates the first transmission power.

In one embodiment, a target bit number is used to determine the first transmission power, the value of the first DAI field in the first signaling and the first value being used together to determine the target bit number.

In one embodiment, the second information is used to indicate whether the first value is related to a distribution of time-domain resource pool(s) in the characteristic time-domain resource pool subset among the first time-domain resource pool set.

In one embodiment, the distribution of the time-domain resource pool(s) in the characteristic time-domain resource pool subset among the first time-domain resource pool set in the present application comprises: at least one of a number of the time-domain resource pool(s) included in the characteristic time-domain resource pool subset and a location of the time-domain resource pool(s) included in the characteristic time-domain resource pool subset in the first time-domain resource pool set.

In one embodiment, the distribution of the time-domain resource pool(s) in the characteristic time-domain resource pool subset among the first time-domain resource pool set in the present application comprises at least: a number of the time-domain resource pool(s) included in the characteristic time-domain resource pool subset.

In one embodiment, the distribution of the time-domain resource pool(s) in the characteristic time-domain resource pool subset among the first time-domain resource pool set in the present application comprises at least: a location of the time-domain resource pool(s) included in the characteristic time-domain resource pool subset in the first time-domain resource pool set.

In one embodiment, the statement "the distribution of the time-domain resource pool(s) in the characteristic time-domain resource pool subset among the first time-domain resource pool set" in the present application and "a number of the time-domain resource pool(s) included in the characteristic time-domain resource pool subset" are equivalent or interchangeable.

In one embodiment, the statement "the distribution of the time-domain resource pool(s) in the characteristic time-domain resource pool subset among the first time-domain resource pool set" in the present application and "a location of the time-domain resource pool(s) included in the characteristic time-domain resource pool subset in the first time-domain resource pool set" are equivalent or interchangeable.

In one embodiment, the statement that "the second information is used to determine whether the first value is related to distribution of the time-domain resource pool(s) in the characteristic time-domain resource pool subset among the first time-domain resource pool set" in the present application and "the second information is used to determine whether the first value is related to the distribution of the time-domain resource pool(s) in the characteristic time-domain resource pool subset among the first time-domain resource pool set or equal to 1" are equivalent or interchangeable.

In one embodiment, the statement "the distribution of the time-domain resource pool(s) in the characteristic time-domain resource pool subset among the first time-domain resource pool set" in the present application and "a number of PDSCHs included in the first PDSCH group" are equivalent or interchangeable.

In one embodiment, the statement "a number of the time-domain resource pool(s) included in the characteristic time-domain resource pool subset" in the present application and "a number of PDSCHs included in the first PDSCH group" are equivalent or interchangeable.

In one embodiment, the statement that "the second information is used to determine whether the first value is related to a distribution of time-domain resource pool(s) in the characteristic time-domain resource pool subset among the first time-domain resource pool set" in the present application comprises:

the second information is used to indicate a third value, the third value being a positive integer; when the third value is no greater than a reference value, the first value is equal to 1; when the third value is greater than a reference value, the distribution of the time-domain resource pool(s) in the characteristic time-domain resource pool subset among the first time-domain resource pool set and the third value are used together to determine a first value; the reference value is a positive integer.

In one embodiment, the statement that "the second information is used to determine whether the first value is related to a distribution of time-domain resource pool(s) in the characteristic time-domain resource pool subset among the first time-domain resource pool set" in the present application comprises:

the second information is used to indicate a third value, the third value being a positive integer; when the third value is greater than a reference value, the first value is equal to 1; when the third value is no greater than a reference value, the distribution of the time-domain resource pool(s) in the characteristic time-domain resource pool subset among the first time-domain resource pool set and the third value are used together to determine a first value; the reference value is a positive integer.

In one embodiment, the statement that "the second information is used to determine whether the first value is related to a distribution of time-domain resource pool(s) in the characteristic time-domain resource pool subset among the first time-domain resource pool set" in the present application comprises:

the second information is used to indicate a third value, the third value being a positive integer; when the third value is less than a reference value, the first value is equal to 1; when the third value is no less than a reference value, the distribution of the time-domain resource pool(s) in the characteristic time-domain resource pool subset among the first time-domain resource pool set and the third value are used together to determine a first value; the reference value is a positive integer.

In one embodiment, the statement that "the second information is used to determine whether the first value is related to a distribution of time-domain resource pool(s) in the characteristic time-domain resource pool subset among the first time-domain resource pool set" in the present application comprises:

the second information is used to indicate a third value, the third value being a positive integer; when the third value is no less than a reference value, the first value is equal to 1; when the third value is less than a reference value, the distribution of the time-domain resource pool(s) in the characteristic time-domain resource pool subset among the first time-domain resource pool set and the third value are used together to determine a first value; the reference value is a positive integer.

In one embodiment, the statement that "the second information is used to determine whether the first value is related to distribution of the time-domain resource pool(s) in the characteristic time-domain resource pool subset among the first time-domain resource pool set" in the present application comprises that the second information is used to indicate a third value, the third value being used to determine whether the first value is related to the distribution of the time-domain resource pool(s) in the characteristic time-domain resource pool subset among the first time-domain resource pool set, the third value being a positive integer.

In one embodiment, the second information is used to indicate a third value, the third value being a positive integer; when the third value is no greater than a reference value, the first value is equal to a first constant; when the third value is greater than a reference value, the distribution of the time-domain resource pool(s) in the characteristic time-domain resource pool subset among the first time-domain resource pool set and the third value are used together to determine a first value; the reference value is a positive integer, and the first constant is a positive integer.

In one embodiment, the first constant is equal to 2.

In one embodiment, the first constant is equal to 4.

In one embodiment, the first constant is equal to 7.

In one embodiment, the first constant is equal to 8.

In one embodiment, a PUCCH format used by the first PUCCH is PUCCH format 2.

In one embodiment, a PUCCH format used by the first PUCCH is PUCCH format 3.

In one embodiment, a PUCCH format used by the first PUCCH is PUCCH format 4.

In one embodiment, a PUCCH format used by the first PUCCH is one of PUCCH format 3 or PUCCH format 4.

In one embodiment, the first signaling is a last DCI format associated with HARQ-ACK bit(s) carried by the first PUCCH.

In one embodiment, the first signaling is a last DCI format that indicates the transmitting of HARQ-ACK bit(s) in a slot to which the first PUCCH belongs.

In one embodiment, the second information is used to indicate a third value, and a magnitude relationship between the third value and a reference value is used to determine whether the first value is related to a distribution of time-domain resource pool(s) in the characteristic time-domain resource pool subset among the first time-domain resource pool set, the reference value being a positive integer.

In one embodiment, a target bit number is used to determine the first transmission power, the target bit number being linear with a second value, the value of the first DAI field in the first signaling being used to determine the second value, the target bit number being linear with the first value.

In one embodiment, the statement that "the second information is used to determine whether the first value is related to distribution of the time-domain resource pool(s) in the characteristic time-domain resource pool subset among the first time-domain resource pool set" in the present application comprises that the second information is used to indicate a third value, the third value being a positive integer, the first value being equal to a smallest one of the number of time-domain resource pool(s) included in the characteristic time-domain resource pool subset and the third value" are equivalent or interchangeable.

In one embodiment, in this application, if two values compared to each other are equal, the smallest one of the two values (or, the smaller of the two values compared to each other) is equal to either of the two values.

**Embodiment 2**

Embodiment 2 illustrates a schematic diagram of a network architecture according to the present application, as shown in FIG. 2.

FIG. 2 is a diagram illustrating a network architecture 200 of 5G NR, Long-Term Evolution (LTE) and Long-Term Evolution Advanced (LTE-A) systems. The 5G NR or LTE network architecture 200 may be called an Evolved Packet System (EPS) 200 or other suitable terminology. The EPS 200 may comprise one or more UEs 201, an NG-RAN 202, a Evolved Packet Core (EPC)/5G-Core Network (5G-CN) 210, a Home Subscriber Server (HSS) 220 and an Internet Service 230. The EPS 200 may be interconnected with other access networks. For simple description, the entities/interfaces are not shown. As shown in FIG. 2, the EPS 200 provides packet switching services. Those skilled in the art will find it easy to understand that various concepts presented throughout the present application can be extended to networks providing circuit switching services or other cellular networks. The NG-RAN 202 comprises an NR node B (gNB) 203 and other gNBs 204. The gNB 203 provides UE 201 oriented user plane and control plane terminations. The gNB 203 may be connected to other gNBs 204 via an Xn interface (for example, backhaul). The gNB 203 may be called a base station, a base transceiver station, a radio base station, a radio transceiver, a transceiver function, a Base Service Set (BSS), an Extended Service Set (ESS), a Transmitter Receiver Point (TRP) or some other applicable terms. The gNB 203 provides an access point of the EPC/5G-CN 210 for the UE 201. Examples of UE 201 include cellular phones, smart phones, Session Initiation Protocol (SIP) phones, laptop computers, Personal Digital Assistant (PDA), Satellite Radios, non-terrestrial base station communications, satellite mobile communications, Global Positioning Systems (GPSs), multimedia devices, video devices, digital audio players (for example, MP3 players), cameras, games consoles, unmanned aerial vehicles, air vehicles, narrow-band physical network equipment, machine-type communication equipment, land vehicles, automobiles, wearable equipment, or any other devices having similar functions. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The gNB 203 is connected to the EPC/5G-CN 210 via an S1/NG interface. The EPC/5G-CN 210 comprises a Mobility Management Entity (MME)/ Authentication Management Field(AMF)/User Plane Function (UPF) 211, other MMEs/AMFs/UPFs 214, a Service Gateway (S-GW) 212 and a Packet Date Network Gateway (P-GW) 213. The MME/AMF/UPF 211 is a control node for processing a signaling between the UE 201 and the EPC/5G-CN 210. Generally, the MME/AMF/UPF 211 provides bearer and connection management. All user Internet Protocol (IP) packets are transmitted through the S-GW 212. The S-GW 212 is connected to the P-GW 213. The P-GW 213 provides UE IP address allocation and other functions. The P-GW 213 is connected to the Internet Service 230. The Internet Service 230 comprises IP services corresponding to operators, specifically including Internet, Intranet, IP Multimedia Subsystem (IMS) and Packet Switching Streaming (PSS) services.

In one embodiment, the UE 201 corresponds to the first node in the present application.

In one embodiment, the UE 201 corresponds to the second node in the present application.

In one embodiment, the gNB 203 corresponds to the first node in the present application.

In one embodiment, the gNB203 corresponds to the second node in the present application.

In one embodiment, the UE 201 corresponds to the first node in the present application, and the gNB203 corresponds to the second node in the present application.

In one embodiment, the gNB 203 is a Macro-Cellular base station.

In one embodiment, the gNB203 is a Micro Cell base station.

In one embodiment, the gNB 203 is a PicoCell base station.

In one embodiment, the gNB203 is a Femtocell.

In one embodiment, the gNB203 is a base station supporting large time-delay difference.

In one embodiment, the gNB203 is a flight platform.

In one embodiment, the gNB203 is satellite equipment.

In one embodiment, the first node and the second node in the present application both correspond to the UE 201, for instance, V2X communications is performed between the first node and the second node.

**Embodiment 3**

Embodiment 3 illustrates a schematic diagram of a radio protocol architecture of a user plane and a control plane according to the present application, as shown in FIG. 3. FIG. 3 is a schematic diagram illustrating an embodiment of a radio protocol architecture of a user plane 350 and a control plane 300. In FIG. 3, the radio protocol architecture for a control plane 300 between a first communication node (UE, gNB or, RSU in V2X) and a second communication node (gNB, UE, or RSU in V2X), or between two UEs, is represented by three layers, i.e., layer 1, layer 2 and layer 3. The layer 1 (L1) is the lowest layer which performs signal processing functions of various PHY layers. The L1 is called PHY 301 in the present application. The layer 2 (L2) 305 is above the PHY 301, and is in charge of the link between a first communication node and a second communication node as well as between two UEs via the PHY 301. The L2 305 comprises a Medium Access Control (MAC) sublayer 302, a Radio Link Control (RLC) sublayer 303 and a Packet Data Convergence Protocol (PDCP) sublayer 304. All these sublayers terminate at the second communication nodes. The PDCP sublayer 304 provides multiplexing among variable radio bearers and logical channels. The PDCP sublayer 304 provides security by encrypting packets and also support for inter-cell handover of the first communication node between second communication nodes. The RLC sublayer 303 provides segmentation and reassembling of a higher-layer packet, retransmission of a lost packet, and reordering of a packet so as to compensate the disordered receiving caused by Hybrid Automatic Repeat reQuest (HARQ). The MAC sublayer 302 provides multiplexing between a logical channel and a transport channel. The MAC sublayer 302 is also responsible for allocating between first communication nodes various radio resources (i.e., resource block) in a cell. The MAC sublayer 302 is also in charge of HARQ operation. In the control plane 300, The RRC sublayer 306 in the L3 layer is responsible for acquiring radio resources (i.e., radio bearer) and configuring the lower layer using an RRC signaling between the second communication node and the first communication node. The radio protocol architecture in the user plane 350 comprises the L1 layer and the L2 layer. In the user plane 350, the radio protocol architecture used for the first communication node and the second communication node in a PHY layer 351, a PDCP sublayer 354 of the L2 layer 355, an RLC sublayer 353 of the L2 layer 355 and a MAC sublayer 352 of the L2 layer 355 is almost the same as the radio protocol architecture used for corresponding layers and sublayers in the control plane 300, but the PDCP sublayer 354 also provides header compression used for higher-layer packet to reduce radio transmission overhead. The L2 layer 355 in the user plane 350 also comprises a Service Data Adaptation Protocol (SDAP) sublayer 356, which is in charge of the mapping between QoS streams and a Data Radio Bearer (DRB), so as to support diversified traffics. Although not described in FIG. 3, the first communication node may comprise several higher layers above the L2 355, such as a network layer (i.e., IP layer) terminated at a P-GW 213 of the network side and an application layer terminated at the other side of the connection (i.e., a peer UE, a server, etc.).

In one embodiment, the radio protocol architecture in FIG. 3 is applicable to the first node in the present application.

In one embodiment, the radio protocol architecture in FIG. 3 is applicable to the second node in the present application.

In one embodiment, the first signaling in the present application is generated by the RRC sublayer 306.

In one embodiment, the first signaling in the present application is generated by the MAC sublayer 302.

In one embodiment, the first signaling in the present application is generated by the MAC sublayer 352.

In one embodiment, the first signaling in the present application is generated by the PHY 301.

In one embodiment, the first signaling in the present application is generated by the PHY 351.

In one embodiment, the first information in the present application is generated by the RRC sublayer 306.

In one embodiment, the first information in the present application is generated by the MAC sublayer 302.

In one embodiment, the first information in the present application is generated by the MAC sublayer 352.

In one embodiment, the first information in the present application is generated by the PHY 301.

In one embodiment, the first information in the present application is generated by the PHY 351.

In one embodiment, the second information in the present application is generated by the RRC sublayer 306.

In one embodiment, the second information in the present application is generated by the MAC sublayer 302.

In one embodiment, the second information in the present application is generated by the MAC sublayer 352.

In one embodiment, the second information in the present application is generated by the PHY 301.

In one embodiment, the second information in the present application is generated by the PHY 351.

### Embodiment 4

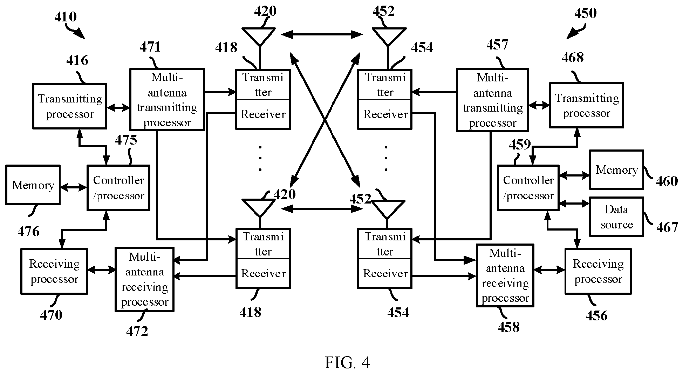

Embodiment 4 illustrates a schematic diagram of a first communication device and a second communication device according to the present application, as shown in FIG. 4. FIG. 4 is a block diagram of a first communication device 410 and a second communication device 450 in communication with each other in an access network.

The first communication device 410 comprises a controller/processor 475, a memory 476, a receiving processor 470, a transmitting processor 416, a multi-antenna receiving processor 472, a multi-antenna transmitting processor 471, a transmitter/receiver 418 and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitter/receiver 454 and an antenna 452.

In a transmission from the first communication device 410 to the second communication device 450, at the first communication device 410, a higher layer packet from a core network is provided to the controller/processor 475. The controller/processor 475 provides functions of the L2 layer. In the transmission from the first communication device 410 to the second communication device 450, the controller/processor 475 provides header compression, encryption, packet segmentation and reordering, and multiplexing between a logical channel and a transport channel, and radio resource allocation of the second communication device 450 based on various priorities. The controller/processor 475 is also responsible for a retransmission of a lost packet, and a signaling to the second communication device 450. The transmitting processor 416 and the multi-antenna transmitting processor 471 perform various signal processing functions used for the L1 layer (i.e., PHY). The transmitting processor 416 performs coding and interleaving so as to ensure a Forward Error Correction (FEC) at the second communication device 450 side and the mapping to signal clusters corresponding to each modulation scheme (i.e., BPSK, QPSK, M-PSK, and M-QAM, etc.). The multi-antenna transmitting processor 471 performs digital spatial precoding, which includes precoding based on codebook and precoding based on non-codebook, and beamforming processing on encoded and modulated signals to generate one or more spatial streams. The transmitting processor 416 then maps each spatial stream into a subcarrier. The mapped symbols are multiplexed with a reference signal (i.e., pilot frequency) in time domain and/or frequency domain, and then they are assembled through Inverse Fast Fourier Transform (IFFT) to generate a physical channel carrying time-domain multicarrier symbol streams. After that the multi-antenna transmitting processor 471 performs transmission analog precoding/beamforming on the time-domain multicarrier symbol streams. Each transmitter 418 converts a baseband multicarrier symbol stream provided by the multi-antenna transmitting processor 471 into a radio frequency (RF) stream, which is later provided to different antennas 420.

In a transmission from the first communication device 410 to the second communication device 450, at the second communication device 450, each receiver 454 receives a signal via a corresponding antenna 452. Each receiver 454 recovers information modulated to the RF carrier, and converts the radio frequency stream into a baseband multicarrier symbol stream to be provided to the receiving processor 456. The receiving processor 456 and the multi-antenna receiving processor 458 perform signal processing functions of the L1 layer. The multi-antenna receiving processor 458 performs reception analog precoding/beamforming on a baseband multicarrier symbol stream provided by the receiver 454. The receiving processor 456 converts the processed baseband multicarrier symbol stream from time domain into frequency domain using FFT. In frequency domain, a physical layer data signal and a reference signal are demultiplexed by the receiving processor 456, wherein the reference signal is used for channel estimation, while the data signal is subjected to multi-antenna detection in the multi-antenna receiving processor 458 to recover any second communication device 450-targeted spatial stream. Symbols on each spatial stream are demodulated and recovered in the receiving processor 456 to generate a soft decision. Then the receiving processor 456 decodes and de-interleaves the soft decision to recover the higher-layer data and control signal transmitted by the first communication device 410 on the physical channel. Next, the higher-layer data and control signal are provided to the controller/processor 459. The controller/processor 459 provides functions of the L2 layer. The controller/processor 459 can be associated with the memory 460 that stores program code and data; the memory 460 may be called a computer readable medium. In the transmission from the first communication device 410 to the second communication device 450, the controller/processor 459 provides demultiplexing between a transport channel and a logical channel, packet reassembling, decrypting, header decompression and control signal processing so as to recover a higher-layer packet from the core network. The higher-layer packet is later provided to all protocol layers above the L2 layer. Or various control signals can be provided to the L3 for processing.

In a transmission from the second communication device 450 to the first communication device 410, at the second communication device 450, the data source 467 is configured to provide a higher-layer packet to the controller/processor 459. The data source 467 represents all protocol layers above the L2 layer. Similar to a transmitting function of the first communication device 410 described in the transmission from the first communication node 410 to the second communication node 450, the controller/processor 459 performs header compression, encryption, packet segmentation and reordering, and multiplexing between a logical channel and a transport channel based on radio resource allocation of the first communication device 410 so as to provide the L2 layer functions used for the user plane and the control plane. The controller/processor 459 is also in charge of a retransmission of a lost packet and a signaling to the first communication device 410. The transmitting processor 468 performs modulation and mapping, as well as channel coding, and the multi-antenna transmitting processor 457 performs digital multi-antenna spatial precoding, including precoding based on codebook and precoding based on non-codebook, and beamforming. The transmitting processor 468 then modulates generated spatial streams into multicarrier/single-carrier symbol streams. The modulated symbol streams, after being subjected to analog precoding/beamforming in the multi-antenna transmitting processor 457, are provided from the transmitter 454 to each antenna 452. Each transmitter 454 firstly converts a baseband symbol stream provided by the multi-antenna transmitting processor 457 into a radio frequency symbol stream, and then provides the radio frequency symbol stream to the antenna 452.

In a transmission from the second communication device 450 to the first communication device 410, the function of the first communication device 410 is similar to the receiving function of the second communication device 450 described in the transmission from the first communication device 410 to the second communication device 450. Each receiver 418 receives a radio frequency signal via a corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly provide functions of the L1 layer. The controller/processor 475 provides functions of the L2 layer. The controller/processor 475 can be associated with the memory 476 that stores program code and data; the memory 476 may be called a computer readable medium. In the transmission between the second communication device 450 and the first communication device 410, the controller/processor 475 provides de-multiplexing between a transport channel and a logical channel, packet reassembling, decrypting, header decompression, control signal processing so as to recover a higher-layer packet from the second communication device (UE) 450. The higher-layer packet coming from the controller/processor 475 may be provided to the core network.

In one embodiment, the first node in the present application comprises the second communication device 450, and the second node in the present application comprises the first communication device 410.

In one subembodiment, the first node is a UE, and the second node is a UE.

In one subembodiment, the first node is a UE, and the second node is a relay node.

In one subembodiment, the first node is a relay node, and the second node is a UE.

In one subembodiment, the first node is a UE, and the second node is a base station.

In one subembodiment, the first node is a relay node, and the second node is a base station.

In one subembodiment, the second node is a UE, and the first node is a base station.

In one subembodiment, the second node is a relay node, and the first node is a base station.

In one subembodiment, the second communication device 450 comprises: at least one controller/processor; the at least one controller/processor is in charge of HARQ operation.

In one subembodiment, the first communication device 410 comprises: at least one controller/processor; the at least one controller/processor is in charge of HARQ operation.

In one subembodiment, the first communication device 410 comprises: at least one controller/processor; the at least one controller/processor is in charge of error detections using ACK and/or NACK protocols to support HARQ operation.

In one embodiment, the second communication device 450 comprises at least one processor and at least one memory. The at least one memory comprises computer program codes; the at least one memory and the computer program codes are configured to be used in collaboration with the at least one processor. The second communication device 450 at least: receives first information, second information and a first signaling, the first signaling indicating a first time-domain resource pool set, the first time-domain resource pool set comprising multiple time-domain resource pools; and receives a first PDSCH group, the first PDSCH group comprising at least one PDSCH; and transmits a first PUCCH with a first transmission power, the first PUCCH carrying at least one HARQ-ACK bit; herein, a characteristic time-domain resource pool subset consists of at least one time-domain resource pool in the first time-domain resource pool set, the first information being used to determine the characteristic time-domain resource pool subset from the first time-domain resource pool set; each of the time-domain resource pool(s) in the characteristic time-domain resource pool subset comprises time-domain resources occupied by a PDSCH in the first PDSCH group; the first signaling comprises a first DAI field, and a value of the first DAI field in the first signaling and a first value are used together to determine the first transmission power, the first value being a positive integer; the second information is used to determine whether the first value is related to distribution of the time-domain resource pool(s) in the characteristic time-domain resource pool subset among the first time-domain resource pool set.

In one subembodiment, the second communication device 450 corresponds to the first node in the present application.

In one embodiment, the second communication device 450 comprises a memory that stores a computer readable instruction program. The computer readable instruction program generates actions when executed by at least one processor. The actions include: receiving first information, second information and a first signaling, the first signaling indicating a first time-domain resource pool set, the first time-domain resource pool set comprising multiple time-domain resource pools; and receiving a first PDSCH group, the first PDSCH group comprising at least one PDSCH; and transmitting a first PUCCH with a first transmission power, the first PUCCH carrying at least one HARQ-ACK bit; herein, a characteristic time-domain resource pool subset consists of at least one time-domain resource pool in the first time-domain resource pool set, the first information being used to determine the characteristic time-domain resource pool subset from the first time-domain resource pool set; each of the time-domain resource pool(s) in the characteristic time-domain resource pool subset comprises time-domain resources occupied by a PDSCH in the first PDSCH group; the first signaling comprises a first DAI field, and a value of the first DAI field in the first signaling and a first value are used together to determine the first transmission power, the first value being a positive integer; the second information is used to determine whether the first value is related to distribution of the time-domain resource pool(s) in the characteristic time-domain resource pool subset among the first time-domain resource pool set.

In one subembodiment, the second communication device 450 corresponds to the first node in the present application.

In one embodiment, the first communication device 410 comprises at least one processor and at least one memory. The at least one memory comprises computer program codes; the at least one memory and the computer program codes are configured to be used in collaboration with the at least one processor. The first communication device 410 at least: transmits first information, second information and a first signaling, the first signaling indicating a first time-domain resource pool set, the first time-domain resource pool set comprising multiple time-domain resource pools; and transmits a first PDSCH group, the first PDSCH group comprising at least one PDSCH; and receives a first PUCCH transmitted with a first transmission power, the first PUCCH carrying at least one HARQ-ACK bit; herein, a characteristic time-domain resource pool subset consists of at least one time-domain resource pool in the first time-domain resource pool set, the first information being used to determine the characteristic time-domain resource pool subset from the first time-domain resource pool set; each of the time-domain resource pool(s) in the characteristic time-domain resource pool subset comprises time-domain resources occupied by a PDSCH in the first PDSCH group; the first signaling comprises a first DAI field, and a value of the first DAI field in the first signaling and a first value are used together to determine the first transmission power, the first value being a positive integer; the second information is used to determine whether the first value is related to distribution of the time-domain resource pool(s) in the characteristic time-domain resource pool subset among the first time-domain resource pool set.

In one subembodiment, the first communication device 410 corresponds to the second node in the present application.

In one embodiment, the first communication device 410 comprises a memory that stores a computer readable instruction program. The computer readable instruction program generates actions when executed by at least one processor. The actions include: transmitting first information, second information and a first signaling, the first signaling indicating a first time-domain resource pool set, the first time-domain resource pool set comprising multiple time-domain resource pools; and transmitting a first PDSCH group, the first PDSCH group comprising at least one PDSCH; and receiving a first PUCCH transmitted with a first transmission power, the first PUCCH carrying at least one HARQ-ACK bit; herein, a characteristic time-domain resource pool subset consists of at least one time-domain resource pool in the first time-domain resource pool set, the first information being used to determine the characteristic time-domain resource pool subset from the first time-domain resource pool set; each of the time-domain resource pool(s) in the characteristic time-domain resource pool subset comprises time-domain resources occupied by a PDSCH in the first PDSCH group; the first signaling comprises a first DAI field, and a value of the first DAI field in the first signaling and a first value are used together to determine the first transmission power, the first value being a positive integer; the second information is used to determine whether the first value is related to distribution of the time-domain resource pool(s) in the characteristic time-domain resource pool subset among the first time-domain resource pool set.

In one subembodiment, the first communication device 410 corresponds to the second node in the present application.

In one embodiment, the second communication device 450 comprises at least one processor and at least one memory. The at least one memory comprises computer program codes; the at least one memory and the computer program codes are configured to be used in collaboration with the at least one processor. The second communication device 450 at least: receives first information, second information and a first signaling, the first signaling indicating a first time-domain resource pool set, the first time-domain resource pool set comprising multiple time-domain resource pools; and receives a first PDSCH group, the first PDSCH group comprising at least one PDSCH; and transmits a first PUCCH with a first transmission power, the first PUCCH carrying at least one HARQ-ACK bit; herein, for a given time-domain resource pool in the first time-domain resource pool set, the first information is used to determine whether the first PDSCH group comprises a PDSCH corresponding to the given time-domain resource pool; the first signaling comprises a first DAI field, the value of the first DAI field in the first signaling and a first value being used together to determine the first transmission power, the first value being a positive integer; the second information is used to determine whether the first value is related to a number of PDSCH(s) included in the first PDSCH group.

In one subembodiment, the second communication device 450 corresponds to the first node in the present application.

In one embodiment, the second communication device 450 comprises a memory that stores a computer readable instruction program. The computer readable instruction program generates actions when executed by at least one processor. The actions include: receiving first information, second information and a first signaling, the first signaling indicating a first time-domain resource pool set, the first time-domain resource pool set comprising multiple time-domain resource pools; and receiving a first PDSCH group, the first PDSCH group comprising at least one PDSCH; and transmitting a first PUCCH with a first transmission power, the first PUCCH carrying at least one HARQ-ACK bit; herein, for a given time-domain resource pool in the first time-domain resource pool set, the first information is used to determine whether the first PDSCH group comprises a PDSCH corresponding to the given time-domain resource pool; the first signaling comprises a first DAI field, the value of the first DAI field in the first signaling and a first value being used together to determine the first transmission power, the first value being a positive integer; the second information is used to determine whether the first value is related to a number of PDSCH(s) included in the first PDSCH group.

In one subembodiment, the second communication device 450 corresponds to the first node in the present application.

In one embodiment, the first communication device 410 comprises at least one processor and at least one memory. The at least one memory comprises computer program codes; the at least one memory and the computer program codes are configured to be used in collaboration with the at least one processor. The first communication device 410 at least: transmits first information, second information and a first signaling, the first signaling indicating a first time-domain resource pool set, the first time-domain resource pool set comprising multiple time-domain resource pools; and transmits a first PDSCH group, the first PDSCH group comprising at least one PDSCH; and receives a first PUCCH transmitted with a first transmission power, the first PUCCH carrying at least one HARQ-ACK bit; herein, for a given time-domain resource pool in the first time-domain resource pool set, the first information is used to determine whether the first PDSCH group comprises a PDSCH corresponding to the given time-domain resource pool; the first signaling comprises a first DAI field, the value of the first DAI field in the first signaling and a first value being used together to determine the first transmission power, the first value being a positive integer; the second information is used to determine whether the first value is related to a number of PDSCH(s) included in the first PDSCH group.

In one subembodiment, the first communication device 410 corresponds to the second node in the present application.

In one embodiment, the first communication device 410 comprises a memory that stores a computer readable instruction program. The computer readable instruction program generates actions when executed by at least one processor. The actions include: transmitting first information, second information and a first signaling, the first signaling indicating a first time-domain resource pool set, the first time-domain resource pool set comprising multiple time-domain resource pools; and transmitting a first PDSCH group, the first PDSCH group comprising at least one PDSCH; and receiving a first PUCCH transmitted with a first transmission power, the first PUCCH carrying at least one HARQ-ACK bit; herein, for a given time-domain resource pool in the first time-domain resource pool set, the first information is used to determine whether the first PDSCH group comprises a PDSCH corresponding to the given time-domain resource pool; the first signaling comprises a first DAI field, the value of the first DAI field in the first signaling and a first value being used together to determine the first transmission power, the first value being a positive integer; the second information is used to determine whether the first value is related to a number of PDSCH(s) included in the first PDSCH group.

In one subembodiment, the first communication device 410 corresponds to the second node in the present application.

In one embodiment, at least one of the antenna 452, the receiver 454, the multi-antenna receiving processor 458, the receiving processor 456, the controller/processor 459, the memory 460, or the data source 467 is used for receiving the first signaling in the present application.

In one embodiment, at least one of the antenna 420, the transmitter 418, the multi-antenna transmitting processor 471, the transmitting processor 416, the controller/processor 475 or the memory 476 is used for transmitting the first signaling in the present application.

In one embodiment, at least one of the antenna 452, the receiver 454, the multi-antenna receiving processor 458, the receiving processor 456, the controller/processor 459, the memory 460, or the data source 467 is used for receiving the first information in the present application.

In one embodiment, at least one of the antenna 420, the transmitter 418, the multi-antenna transmitting processor 471, the transmitting processor 416, the controller/processor 475 or the memory 476 is used for transmitting the first information in the present application.

In one embodiment, at least one of the antenna 452, the receiver 454, the multi-antenna receiving processor 458, the receiving processor 456, the controller/processor 459, the memory 460, or the data source 467 is used for receiving the second information in the present application.

In one embodiment, at least one of the antenna 420, the transmitter 418, the multi-antenna transmitting processor 471, the transmitting processor 416, the controller/processor 475 or the memory 476 is used for transmitting the second information in the present application.

In one embodiment, at least one of the antenna 452, the receiver 454, the multi-antenna receiving processor 458, the receiving processor 456, the controller/processor 459, the memory 460, or the data source 467 is used for receiving the first PDSCH group in the present application.

In one embodiment, at least one of the antenna 420, the transmitter 418, the multi-antenna transmitting processor 471, the transmitting processor 416, the controller/processor 475 or the memory 476 is used for transmitting the first PDSCH group in the present application.

In one embodiment, at least one of the antenna 452, the transmitter 454, the multi-antenna transmitting processor 458, the transmitting processor 468, the controller/processor 459, the memory 460, or the data source 467 is used for transmitting the first PUCCH in the present application with the first transmission power in the present application.

In one embodiment, at least one of the antenna 420, the receiver 418, the multi-antenna receiving processor 472, the receiving processor 470, the controller/processor 475 or the memory 476 is used for receiving the first PUCCH in the present application transmitted with the first transmission power in the present application.

## Embodiment 5

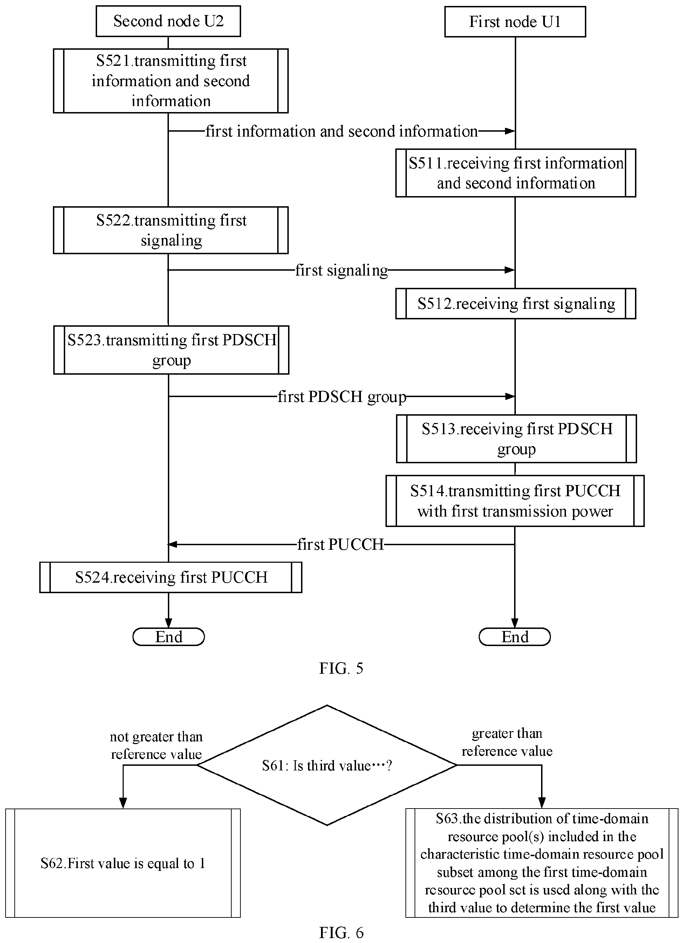

Embodiment 5 illustrates a flowchart of signal transmission according to one embodiment of the present application, as shown in FIG. 5. In FIG. 5, a first node U1 and a second node U2 are in communications via an air interface.

The first node U1 receives first information and second information in step S511; receives a first signaling in step S512; receives a first PDSCH group in step S513; and transmits a first PUCCH with a first transmission power in step S514.

The second node U2 transmits the first information and second information in step S521; transmits the first signaling in step S522; transmits the first PDSCH group in step S523; and receives the first PUCCH in step S524.

In Embodiment 5, the first signaling indicates a first time-domain resource pool set, the first time-domain resource pool set comprising multiple time-domain resource pools; the first PDSCH group comprises at least one PDSCH; the first PUCCH carries at least one HARQ-ACK bit; a characteristic time-domain resource pool subset consists of at least one time-domain resource pool in the first time-domain resource pool set, the first information being used to determine the characteristic time-domain resource pool subset from the first time-domain resource pool set; each of the time-domain resource pool(s) in the characteristic time-domain resource pool subset comprises time-domain resources occupied by a PDSCH in the first PDSCH group; the first signaling comprises a first DAI field, a target bit number is used to determine the first transmission power, the value of the first DAI field in the first signaling and the first value being used together to determine the target bit number, the first value being a positive integer; the target bit number is used to determine a target amount of adjustment, the target amount of adjustment being used to determine a target transmission power, the first transmission power being equal to a smaller value between an upper-limit transmission power and the target transmission power, the upper-limit transmission power being default or configurable; the second information is used to determine whether the first value is related to the distribution of the time-domain resource pool(s) in the characteristic time-domain resource pool subset among the first time-domain resource pool set; the second information is used to indicate a third value, the third value being a positive integer; when the third value is no greater than a reference value, the first value is equal to 1; when the third value is greater than a reference value, the distribution of the time-domain resource pool(s) in the characteristic time-domain resource pool subset among the first time-domain resource pool set and the third value are used together to determine the first value; the reference value is a positive integer.

In one subembodiment of Embodiment 5, when the third value is greater than the reference value: the third value is used to determine multiple time-domain resource pool subsets from the first time-domain resource pool set, among the multiple time-domain resource pool subsets each time-domain resource pool subset comprising at least one time-domain resource pool in the first time-domain resource pool set, the first value being equal to a number of time-domain resource pool subset(s) each comprising at least one time-domain resource pool belonging to the characteristic time-domain resource pool subset among the multiple time-domain resource pool subsets.

In one subembodiment of Embodiment 5, when the third value is greater than the reference value: the first value is equal to a smallest one of the number of time-domain resource pool(s) included in the characteristic time-domain resource pool subset and the third value.

In one subembodiment of Embodiment 5, the first information is used to determine types of time-domain symbols; when a given time-domain resource pool in the first time-domain resource pool set has an overlap with at least one time-domain symbol of which the type is uplink symbol, the given time-domain resource pool does not belong to the characteristic time-domain resource pool subset.

In one subembodiment of Embodiment 5, the first information is used to determine types of time-domain symbols; when a given time-domain resource pool in the first time-domain resource pool set comprises at least one time-domain symbol of which the type is uplink symbol, the given time-domain resource pool does not belong to the characteristic time-domain resource pool subset.

In one embodiment, the first node U1 is the first node in the present application.

In one embodiment, the second node U2 is the second node in the present application.

In one embodiment, the first node U1 is a UE.

In one embodiment, the first node U1 is a base station.

In one embodiment, the second node U2 is a base station.

In one embodiment, the second node U2 is a UE.

In one embodiment, an air interface between the second node U2 and the first node U1 is a Uu interface.

In one embodiment, an air interface between the second node U2 and the first node U1 includes a cellular link.

In one embodiment, an air interface between the second node U2 and the first node U1 is a PCS interface.

In one embodiment, an air interface between the second node U2 and the first node U1 includes a sidelink.

In one embodiment, an air interface between the second node U2 and the first node U1 includes a radio interface between a base station and a UE.

In one embodiment, an air interface between the second node U2 and the first node U1 includes a radio interface between a satellite device and a UE.

In one embodiment, an air interface between the second node U2 and the first node U1 includes a radio interface between a UE and another UE.

In one embodiment, in the present application, when the first PUSCH carries both the first-type HARQ-ACK bits and the second-type HARQ-ACK bits, the first node encodes the first-type HARQ-ACK bits and the second-type HARQ-ACK bits separately.

In one embodiment, a problem to be solved by the present application includes: in instances where a HARQ-ACK bit bundling operation may be performed for a plurality of PDSCHs (or a plurality of bit blocks carried by a plurality of PDSCHs) to reduce the HARQ-ACK feedback overhead, how to determine the transmission power of the PUCCH carrying the HARQ-ACK bits after performing the bundling operation.

In one embodiment, a problem to be solved by the present application includes how to determine the number of HARQ-ACK bits that are used to obtain the PUCCH transmission power.

In one embodiment, a problem to be solved by the present application includes how to determine the number of HARQ-ACK bits being used to obtain the PUCCH transmission power based on the time-domain configuration.

In one embodiment, a problem to be solved by the present application includes how to determine the first transmission power based on the time-domain resources indicated by the first signaling.

In one embodiment, the first information is received before the second information.

In one embodiment, the first information is received after the second information.

In one embodiment, the first information and the second information are received simultaneously.

**Embodiment 6**

Embodiment 6 illustrates a schematic diagram of a relation between a third value and a first value according to one embodiment of the present application, as shown in FIG. 6. In FIG. 6, a third value is determined in S61, a first value is equal to 1 in S62, and the distribution of time-domain resource pool(s) included in a characteristic time-domain resource pool subset among a first time-domain resource pool set is used along with the third value to determine the first value in S63.

In Embodiment 6, the second information is used to indicate a third value, the third value being a positive integer; when the third value is no greater than a reference value, the first value is equal to 1; when the third value is greater than a reference value, the distribution of the time-domain resource pool(s) in the characteristic time-domain resource pool subset among the first time-domain resource pool set and the third value are used together to determine the first value; the reference value is a positive integer.

In one embodiment, the second information is used to indicate a third value, the third value being a positive integer; when the third value is no greater than a reference value, the first value is equal to 1; when the third value is greater than a reference value, the distribution of the time-domain resource pool(s) in the characteristic time-domain resource pool subset among the first time-domain resource pool set and the third value are used together to determine the first value; the reference value is a positive integer.

In one embodiment, the first value is unrelated to the distribution of the time-domain resource pool(s) in the characteristic time-domain resource pool subset among the first time-domain resource pool set when the third value is not greater than the reference value.

In one embodiment, the second information explicitly indicates the third value.

In one embodiment, the second information implicitly indicates the third value.

In one embodiment, the third value is one of 1, 2, or 4.

In one embodiment, the third value is one of 1, 2, 3, or 4.

In one embodiment, the third value is one of 1, 2, 3, 4, 5, 6, 7, or 8.

In one embodiment, the third value is not greater than 1024.

In one embodiment, the third value is a configured maximum number of Transport Block (TB) groups.

In one embodiment, the reference value is 1.

In one embodiment, the reference value is one of 1, 2, or 4.

In one embodiment, the reference value is not greater than 1024.

In one embodiment, the reference value is default.

In one embodiment, the reference value is configurable.

In one embodiment, harq-ACK-SpatialBundlingPUCCH is configured for the first node.

In one embodiment, the value of maxNrofCodeWordsScheduledByDCI is configured to be 1.

In one embodiment, all PDSCHs received by the first node are each configured to carry only one Transport Block (TB).

In one embodiment, all PDSCHs received by the first node are each configured to carry up to one Transport Block.

In one embodiment, the statement in the present application that "the distribution of the time-domain resource pool(s) in the characteristic time-domain resource pool subset among the first time-domain resource pool set and the third value are used together to determine the first value" comprises that: the third value is used to determine multiple time-domain resource pool subsets from the first time-domain resource pool set, among the multiple time-domain resource pool subsets each time-domain resource pool subset comprising at least one time-domain resource pool in the first time-domain resource pool set, the first value being equal to a number of time-domain resource pool subset(s) each comprising at least one time-domain resource pool belonging to the characteristic time-domain resource pool subset among the multiple time-domain resource pool subsets.

In one embodiment, the statement that "the distribution of the time-domain resource pool(s) in the characteristic time-domain resource pool subset among the first time-domain resource pool set and the third value are used together to determine the first value" in the present application includes that the first value is equal to a smallest one of the number of time-domain resource pool(s) included in the characteristic time-domain resource pool subset and the third value.

**Embodiment 7**

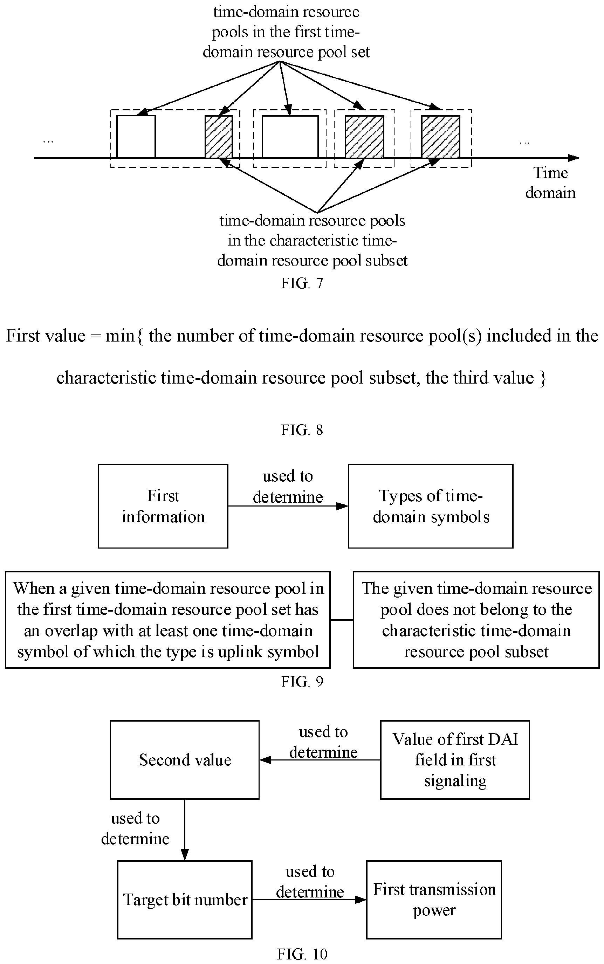

Embodiment 7 illustrates a schematic diagram of relations among a first time-domain resource pool set, a characteristic time-domain resource pool subset, and multiple time-domain resource pool subsets according to one embodiment of the present application, as shown in FIG. 7. In FIG. 7, each solid-line box represents a time-domain resource pool in the first time-domain resource pool set, a slash-filled solid-line box represents a time-domain resource pool in the characteristic time-domain resource pool subset, and the time-domain resource pools in each of the dashed-line boxes constitute one of the multiple time-domain resource pool subsets in the present application. In FIG. 7, the first time-domain resource pool set comprises a total of 5 time-domain resource pools, and 3 out of the 5 time-domain resource pools belong to the characteristic time-domain resource pool subset, and these 5 time-domain resource pools are divided (indicated by the dashed boxes) into 4 time-domain resource pool subsets.

In Embodiment 7, the third value in the present application is greater than the reference value in the present application; the third value is used to determine multiple time-domain resource pool subsets from the first time-domain resource pool set, among the multiple time-domain resource pool subsets each time-domain resource pool subset comprising at least one time-domain resource pool in the first time-domain resource pool set, the first value in the present application being equal to a number of time-domain resource pool subset(s) each comprising at least one time-domain resource pool belonging to the characteristic time-domain resource pool subset among the multiple time-domain resource pool subsets.

In one subembodiment of Embodiment 7, the third value is equal to 4 and the first value is equal to 3.

In one embodiment, $M = \min(N,C)$, $M_1 = $

$$K_1 = \left\lceil \frac{C}{M} \right\rceil \qquad K_2 = \left\lfloor \frac{C}{M} \right\rfloor$$

$\text{mod}(C,M)$, , ; where C is a number of time-domain resource pools included in the first time-domain resource pool set, N is the third value, and M is a number of time-domain resource pool subsets included by the multiple time-domain resource pool subsets; if $M_1 > 0$, for $m = 0,1,...,M_1 - 1$, the time-domain resource pool subset with a sorting index m among the multiple time-domain resource pool subsets is formed by time-domain resource pools with the following sorting index values in the first time-domain resource pool set: $M_1 \cdot K_1 + (m-M_1) \cdot K2 + k$, $k = 0,1,..., K_2 -1$; for $m = M_1, M_1 +1,...,M -1$, the time-domain resource pool subset with a sorting index m among the multiple time-domain resource pool subsets is formed by time-domain resource pools with the following sorting index values in the first time-domain resource pool set: $M_1 \cdot K_1 + (m - M_1) \cdot K_2 + k$, $k = 0,1,..., K_2 -1$.

In one embodiment, the sorting index of a time-domain resource pool subset in the multiple time-domain resource pool subsets is sequentially incremented by 1 from 0.

In one embodiment, the sorting index of a time-domain resource pool in the first time-domain resource pool set is sequentially incremented by 1 from 0.

In one embodiment, the sorting index of a time-domain resource pool in the first time-domain resource pool set is determined according to occupied time-domain resources in an order from the earliest to the latest.

In one embodiment, the sorting index of a time-domain resource pool in the first time-domain resource pool set is determined according to start times of occupied time-domain resources in an order from the earliest to the latest.

In one embodiment, the sorting index of a time-domain resource pool in the first time-domain resource pool set is determined according to end times of occupied time-domain resources in an order from the earliest to the latest.

In one embodiment, the sorting index of a time-domain resource pool in the first time-domain resource pool set is determined according to occupied time-domain resources in an order from the most to the least.

In one embodiment, the number of time-domain resource pool subsets included by the multiple time-domain resource pool subsets is equal to: a smallest one of the number of time-domain resource pool(s) included in the first time-domain resource pool set and the third value.

In one embodiment, the statement that "the third value is used to determine multiple time-domain resource pool subsets from the first time-domain resource pool set" in the present application comprises: the first time-domain resource pool set is divided into multiple time-domain resource pool subsets, and the third value is used to determine how many time-domain resource pool subsets the first time-domain resource pool set has been divided into.

In one embodiment, the statement that "the third value is used to determine multiple time-domain resource pool subsets from the first time-domain resource pool set" in the present application comprises: the first time-domain resource pool set is divided into multiple time-domain resource pool subsets, and a number of time-domain resource pool subsets included by the multiple time-domain resource pool subsets is equal to a smallest one of the number of time-domain resource pool(s) included in the first time-domain resource pool set and the third value.

In one embodiment, the distribution of the time-domain resource pool(s) in the characteristic time-domain resource pool subset among the first time-domain resource pool set in the present application comprises: to which time-domain resource pool subset(s) of the multiple time-domain resource pool subsets the time-domain resource pool(s) included in the characteristic time-domain resource pool subset respectively belongs(belong).

In one embodiment, the multiple time-domain resource pool subsets are not mutually overlapped.

In one embodiment, the multiple time domain resource pool subsets are not mutually overlapped in time domain.

In one embodiment, the first time-domain resource pool set is divided as equally as possible into multiple time-domain resource pool subsets in chronological order; the number of time-domain resource pool subsets included by the multiple time-domain resource pool subsets is equal to: a smallest one of the number of time-domain resource pool(s) included in the first time-domain resource pool set and the third value.

In one embodiment, the number of time-domain resource pool subsets included by the multiple time-domain resource pool subsets is equal to the third value.

In one embodiment, the statement "the first value in the present application being equal to a number of time-domain resource pool subset(s) each comprising at least one time-domain resource pool belonging to the characteristic time-domain resource pool subset among the multiple time-domain resource pool subsets" comprises that: the first value is equal to a number of valid time-domain resource pool subsets among the multiple time-domain resource pool subsets, each valid time-domain resource pool subset of the multiple time-domain resource pool subsets comprising at least one time-domain resource pool belonging to the characteristic time-domain resource pool subset.

## Embodiment 8

Embodiment 8 illustrates a schematic diagram explaining a first value according to one embodiment of the present application, as shown in FIG. 8.

In Embodiment 8, the third value is greater than the reference value in the present application; the first value is equal to a smallest one of the number of time-domain resource pool(s) included in the characteristic time-domain resource pool subset and the third value.

## Embodiment 9

Embodiment 9 illustrates a schematic diagram of relations among first information, a given time-domain resource pool and a characteristic time-domain resource pool subset according to one embodiment of the present application, as shown in FIG. 9.

In Embodiment 9, the first information is used to determine types of time-domain symbols; when a given time-domain resource pool in the first time-domain resource pool set has an overlap with at least one time-domain symbol of which the type is uplink symbol, the given time-domain resource pool does not belong to the characteristic time-domain resource pool subset.

In one embodiment, the first information is used to indicate a type of time-domain symbols.

In one embodiment, the first information is used to explicitly indicate a type of time-domain symbols.

In one embodiment, the first information is used to indicate a type of each time-domain symbol comprised in at least a first time window, the first time window comprising all time-domain resources occupied by at least the first time-domain resource pool set.

In one embodiment, the first information is used to determine a type of time-domain symbols comprised in each resource pool in the first time-domain resource pool set.

In one embodiment, the first information is used to determine a type of time-domain symbols by which time-domain resources occupied overlap with any resource pool in the first time-domain resource pool set.

In one embodiment, the first information is used to indicate a type of time-domain symbols comprised in each resource pool in the first time-domain resource pool set.

In one embodiment, the first information is used to indicate a type of time-domain symbols by which time-domain resources occupied overlap with any resource pool in the first time-domain resource pool set.

In one embodiment, the given time-domain resource pool is any time-domain resource pool in the first time-domain resource pool set.

In one embodiment, the type of a time-domain symbol may be configured as one of {uplink symbol, downlink symbol}.

In one embodiment, the type of a time-domain symbol may be configured as one of {uplink symbol, downlink symbol, flexible symbol}.

In one embodiment, none of the time-domain resource pools in the characteristic time-domain resource pool subset overlaps with any time-domain symbol of which the type is uplink symbol.

In one embodiment, when a given time-domain resource pool in the first time-domain resource pool set does not overlap with any time-domain symbol of which the type is uplink symbol, the given time-domain resource pool belongs to the characteristic time-domain resource pool subset.

In one embodiment, the first information is used to determine types of time-domain symbols; for a given time-domain resource pool in the first time-domain resource pool set, the type of time-domain symbols comprised in the given time-domain resource pool is used to determine whether the given time-domain resource pool belongs to the characteristic time-domain resource pool subset.

In one embodiment, the first information is used to determine types of time-domain symbols; when a given time-domain resource pool in the first time-domain resource pool set comprises at least one time-domain symbol of which the type is uplink symbol, the given time-domain resource pool does not belong to the characteristic time-domain resource pool subset.

In one embodiment, when a given time-domain resource pool in the first time-domain resource pool set does not comprise any time-domain symbol of which the type is uplink symbol, the given time-domain resource pool belongs to the characteristic time-domain resource pool subset.

In one embodiment, none of the time-domain resource pools in the characteristic time-domain resource pool subset comprises a time-domain symbol of which the type is uplink symbol.

In one embodiment, the first information is used to determine types of time-domain symbols; only if a given time-domain resource pool in the first time-domain resource pool set has an overlap with at least one time-domain symbol of which the type is uplink symbol will the given time-domain resource pool belong to the characteristic time-domain resource pool subset.

In one embodiment, the first information is used to determine types of time-domain symbols; only if a given time-domain resource pool in the first time-domain resource pool set has an overlap with at least one time-domain symbol of which the type is downlink symbol will the given time-domain resource pool belong to the characteristic time-domain resource pool subset.

## Embodiment 10

Embodiment 10 illustrates a schematic diagram of relations among the value of a first DAI field in a first signaling, a second value, a target bit number and a first transmission power according to one embodiment of the present application, as shown in FIG. 10.

In Embodiment 10, a target bit number is used to determine the first transmission power, a second value being used to determine the target bit number, the value of the first DAI field in the first signaling being used to determine the second value.

In one embodiment, the target bit number is linear with the second value.

In one embodiment, the target bit number is equal to a sum of multiple values, the second value being one of the multiple values.

In one embodiment, the value of the first DAI field in the first signaling is used to determine that the second value is equal to 0.

In one embodiment, the second value is equal to a first intermediate quantity multiplied by a fifth value, the first intermediate quantity being equal to (the value of the first DAI field in the first signaling - a first total number) modulo a fourth value.

In one embodiment, the fifth value is a positive integer.

In one embodiment, the fifth value is configurable.

In one embodiment, the fifth value is determined based on the configuration of higher layer signaling.

In one embodiment, the fifth value is associated with the third value.

In one embodiment, the third value is used to determine the fifth value.

In one embodiment, when the third value is not greater than the reference value, the fifth value is equal to 1.

In one embodiment, when the third value is not greater than the reference value, the fifth value is equal to 1 or 2.

In one embodiment, when the third value is not greater than the reference value: if the value of a parameter maxNrofCodeWordsScheduledByDCI for any serving cell is 2 and harq-ACK-SpatialBundlingPUCCH is not configured, then the fifth value is equal to 2, otherwise, the fifth value is equal to 1.

In one embodiment, when the third value is greater than the reference value, the fifth value is a maximum value in a first value set, the first value set comprising at least one value, each value in the first value set being configurable.

In one embodiment, each value in the first value set is specific to a serving cell.

In one embodiment, one value in the first value set is configured by a higher layer signaling.

In one embodiment, one value in the first value set is configured by an RRC signaling.

In one embodiment, one value in the first value set is configured by a MAC CE signaling.

In one embodiment, the fourth value is a positive integer.

In one embodiment, the fourth value is a positive integer greater than 1.

In one embodiment, the fourth value is equal to the V-th power of 2, V being equal to a number of bits included in a counter DAI field.

In one embodiment, the fourth value is equal to the V-th power of 2, V being equal to a number of bits included in the first field in the first signaling.

In one embodiment, the fourth value is equal to the V-th power of 2, V being equal to a number of bits included in a counter DAI field in the first signaling.

In one embodiment, the first total number is a cumulative number of DCI formats.

In one embodiment, the first total number is a total number of DCI formats detected to be associated with at least one HARQ-ACK bit carried by the first PUCCH.

In one embodiment, the first total number is a total number of DCI formats detected to be associated with HARQ-ACK bits in a target HARQ-ACK sub-codebook, the target HARQ-ACK sub-codebook being a HARQ-ACK sub-codebook comprising the HARQ-ACK bit associated with the first signaling.

In one embodiment, in the present application, a DCI format associated with a HARQ-ACK bit means that: the HARQ-ACK bit is used to indicate whether at least one bit block in at least one PDSCH scheduled by the DCI format is correctly decoded or, alternatively, the HARQ-ACK bit is used to indicate that the DCI format has been detected.

In one embodiment, in the present application, a DCI format associated with a HARQ-ACK bit means that: the HARQ-ACK bit is specific to at least one PDSCH reception scheduled by the DCI format, or, the HARQ-ACK bit is specific to the DCI format and the DCI format is not used for scheduling PDSCH reception.

In one embodiment, the first total number is a positive integer.

In one embodiment, the second value is equal to 0.

In one embodiment, the result of calculation of the second value is equal to 0.

In one embodiment, the result of calculation of the first intermediate quantity is equal to 0.

In one embodiment, the result of calculation of the second value is not equal to 0.

In one embodiment, the result of calculation of the first intermediate quantity is not equal to 0.

In one embodiment, when the third value is not greater than the reference value, the target bit number corresponds to a first HARQ-ACK sub-codebook; when the third value is greater than the reference value, the target bit number corresponds to a second HARQ-ACK sub-codebook.

**Embodiment 11**

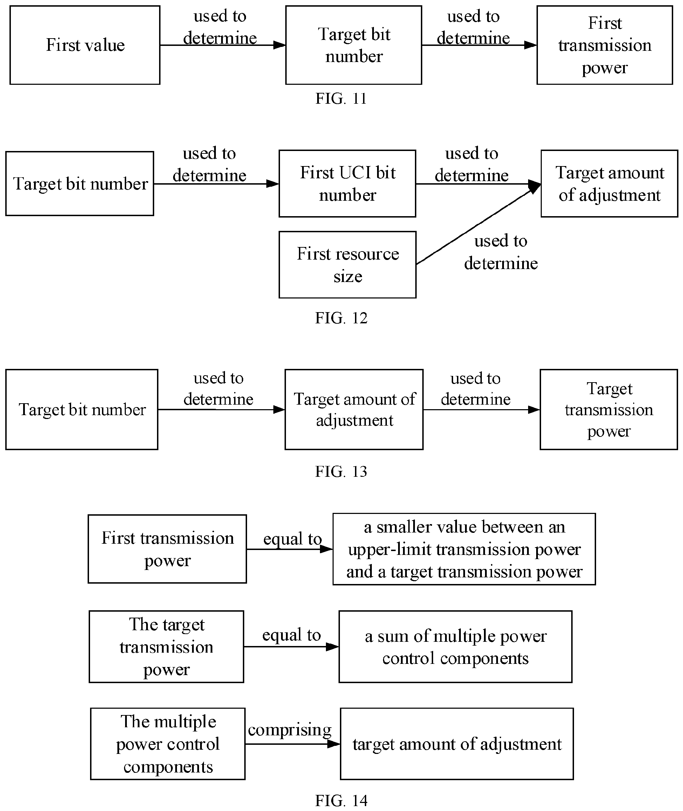

Embodiment 11 illustrates a schematic diagram of relations among a first value, a target bit number and a first transmission power according to one embodiment of the present application, as shown in FIG. 11.

In Embodiment 11, a target bit number is used to determine the first transmission power, the first value being used to determine the target bit number.

In one embodiment, the target bit number is equal to the first value.

In one embodiment, the target bit number is linear with the first value.

In one embodiment, the target bit number is equal to a sum of multiple values, the first value being one of the multiple values.

In one embodiment, the target bit number is equal to a sum of multiple values, a second total being one of the multiple values, with the first value being counted into the second total number.

In one embodiment, each value counted into the second total is associated to a DCI format.

In one embodiment, one of the values counted into the second total is a number of PDSCH(s) scheduled by a DCI format.

In one embodiment, one of the values counted into the second total is a number of transport blocks (TBs) in PDSCH(s) scheduled by a DCI format.

In one embodiment, one of the values counted into the second total is a number of PDSCH group(s) scheduled by a DCI format.

In one embodiment, one of the values counted into the second total is a number of TB group(s) scheduled by a DCI format.

In one embodiment, the first node is not configured to receive an SPS PDSCH.

**Embodiment 12**

Embodiment 12 illustrates a schematic diagram of relations among a target bit number, a first UCI bit number, a first resource size and a target amount of adjustment according to one embodiment of the present application, as shown in FIG. 12.

In Embodiment 12, a target bit number is used to determine a first UCI bit number, and the first UCI bit number is used together with a first resource size for determining a target amount of adjustment.

In one embodiment, the first resource size is equal to a number of resource elements (REs) used for bearing UCI transmitted in the first PUCCH.

In one embodiment, the target bit number is used to determine a first UCI bit number, and the first UCI bit number is used together with a first resource size for determining a target amount of adjustment, the first resource size referring to a number of REs.

In one embodiment, the target bit number is used to determine a first UCI bit number, and the first UCI bit number is used together with a first resource size for determining a target amount of adjustment, the first resource size being no greater than a number of REs occupied by the first PUCCH.

In one embodiment, the target bit number is used to determine a first UCI bit number, and the first UCI bit number is used together with a first resource size for determining a target amount of adjustment, the first resource size being no greater than a number of REs included in time-frequency domain by a PUCCH resource to which the resource occupied by the first PUCCH belongs.

In one embodiment, the first resource size is a number of REs occupied by the first PUCCH.

In one embodiment, the first resource size is a number of REs occupied by the first PUCCH in time-frequency domain.

In one embodiment, the first resource size is a number of REs occupied by a transmission of the first PUCCH excluding RE(s) occupied by a Demodulation reference signal (DM-RS).

In one embodiment, the first resource size is equal to: $M_{RB} \times N_{sc} \times N_{symbol}$; the $M_{RB}$ is equal to a number of resource blocks used for a transmission of the first PUCCH, $N_{sc}$ is equal to a number of subcarrier(s) other than subcarrier(s) used for DM-RS transmission in each Resource Block (RB), and $N_{symbol}$ is equal to a number of time-domain symbol(s) other than time-domain symbol(s) used for DM-RS transmission in the transmission of the first PUCCH.

In one embodiment, that the first UCI bit number is used together with a first resource size for determining a target amount of adjustment means that: a second amount of calculation is equal to a product of $K_1$ and the first UCI bit number being divided by the first resource size, and the target amount of adjustment is equal to 10 multiplied by the logarithm of the second amount of calculation to the base 10, where $K_1$ is a constant or is configurable.

In one embodiment, that the first UCI bit number is used together with a first resource size for determining a target amount of adjustment means that: a second amount of calculation is equal to a product of $K_1$ and the first UCI bit number being divided by the first resource size, and the target amount of adjustment = $10 \times \log_{10}$ (the second amount of calculation), where $K_1$ is equal to 6.

In one embodiment, a second amount of calculation is equal to a product of $K_1$ and the first UCI bit number being divided by the first resource size, and the target amount of adjustment = $10 \times \log_{10}$ (the second amount of calculation), where $K_1$ is equal to 6.

In one embodiment, a second amount of calculation is equal to a product of $K_2$ and the first UCI bit number being divided by the first resource size, and the target amount of adjustment is equal to $10 \times \log_{10}(2^{\{the second amount of calculation\}}-1)$, where $K_2$ is pre-defined or is configurable.

In one embodiment, $K_2$ is greater than 0.

In one embodiment, $K_2$ is equal to 2.4.

In one embodiment, $K_2$ is -pre-defined.

In one embodiment, $K_2$ is configurable.

In one embodiment, a ratio of the first UCI bit number to the first resource size is used to determine the target amount of adjustment.

In one embodiment, the target amount of adjustment is linear with a product of the first UCI bit number and the first resource size.

In one embodiment, $10^{(the target amount of adjustment/10)}$ is linear with {the first UCI bit number/the first resource size}.

In one embodiment, a ratio of the first UCI bit number to the first resource size is used to determine the target amount of adjustment.

In one embodiment, the first UCI bit number is equal to a sum of multiple reference HARQ-ACK bit numbers, the target bit number being one of the multiple reference HARQ-ACK bit numbers; all of the multiple reference HARQ-ACK bit numbers are numbers of HARQ-ACK bits determined for obtaining the transmission power of the PUCCH.

In one embodiment, any one of the multiple reference HARQ-ACK bit numbers is equal to a non-negative integer.

In one embodiment, the multiple reference HARQ-ACK bit numbers respectively correspond to different HARQ-ACK sub-codebooks.

In one embodiment, the first UCI bit number is equal to the target bit number.

In one embodiment, the first UCI bit number is linear with the target bit number.

In one embodiment, the target bit number is one of multiple addends for obtaining the first UCI bit number.

In one embodiment, the first UCI bit number is equal to a sum of multiple UCI bit numbers, with the target bit number being one of the multiple UCI bit numbers.

In one embodiment, the first UCI bit number is equal to a sum of multiple UCI bit numbers; a sum of multiple reference HARQ-ACK bit numbers is one of the multiple UCI bit numbers, the target bit number being one of the multiple reference HARQ-ACK bit numbers; all of the multiple reference HARQ-ACK bit numbers being numbers of HARQ-ACK bits determined for obtaining the transmission power of the PUCCH.

In one embodiment, any of the multiple UCI bit numbers is a number of UCI bit(s) of a type.

In one embodiment, one of the multiple UCI bit numbers is a number of SR bit(s).

In one embodiment, one of the multiple UCI bit numbers is a number of CSI bit(s).

In one embodiment, the first UCI bit number is equal to a sum of the target bit number, a number of Scheduling request (SR) bits carried by the first PUCCH and a number of Channel State Information (CSI) bits carried by the first PUCCH.

In one embodiment, the first UCI bit number is equal to a sum of multiple reference HARQ-ACK bit numbers plus a number of SR bits carried by the first PUCCH plus a number of CSI bits carried by the first PUCCH, the target bit number being one of the multiple reference HARQ-ACK bit numbers; all of the multiple reference HARQ-ACK bit numbers are numbers of HARQ-ACK bits determined for obtaining the transmission power of the PUCCH.

In one embodiment, a number of SR bit(s) carried by the first PUCCH is equal to 0.

In one embodiment, a number of SR bit(s) carried by the first PUCCH is greater than 0.

In one embodiment, a number of CSI bit(s) carried by the first PUCCH is equal to 0.

In one embodiment, a number of CSI bit(s) carried by the first PUCCH is greater than 0.

In one embodiment, the target amount of adjustment is an adjustment component of a PUCCH transmission power.

## Embodiment 13

Embodiment 13 illustrates a schematic diagram of relations among a target bit number, a target amount of adjustment and a target transmission power according to one embodiment of the present application, as shown in FIG. 13.

In Embodiment 13, a target bit number is used to determine a target amount of adjustment, the target amount of adjustment being used to determine the target transmission power.

In one embodiment, the target bit number is used to indicate the target amount of adjustment.

In one embodiment, the target bit number is used to explicitly indicate the target amount of adjustment.

In one embodiment, the target bit number is used to implicitly indicate the target amount of adjustment.

In one embodiment, the target bit number is used to perform a calculation to obtain the target amount of adjustment.

In one embodiment, the statement in the present application "the target bit number is used to determine a target amount of adjustment" includes that the target bit number is used to determine a first UCI bit number, and the first UCI bit number is used together with a first resource size for determining a target amount of adjustment, the first resource size being no greater than a number of REs occupied by the first PUCCH.

In one embodiment, the statement in the present application "the target amount of adjustment being used to determine the target transmission power" includes that the target transmission power is equal to a sum of multiple power control components, with the target amount of adjustment being one of the multiple power control components.

In one embodiment, the statement in the present application "the target amount of adjustment being used to determine the target transmission power" includes that the target transmission power is linear with the target amount of adjustment.

In one embodiment, the statement in the present application "the target amount of adjustment being used to determine the target transmission power" includes that the target transmission power is linear with the target amount of adjustment in the dB domain.

In one embodiment, the statement in the present application "the target amount of adjustment being used to determine the target transmission power" includes that the target transmission power is proportional to the target amount of adjustment.

In one embodiment, the first transmission power in the present application is equal to a smaller value between the upper-limit transmission power and the target transmission power in the present application, where the target transmission power is a sum of multiple power control components, with a target amount of adjustment being one of the multiple power control components.

In one embodiment, the first transmission power in the present application is equal to a smaller value between the upper-limit transmission power and the target transmission power in the present application, where the target transmission power is a product of multiple power control components, with a target amount of adjustment being one of the multiple power control components.

## Embodiment 14

Embodiment 14 illustrates a schematic diagram of relations among a first transmission power, a target transmission power and a target amount of adjustment according to one embodiment of the present application, as shown in FIG. 14.

In Embodiment 14, the first transmission power is equal to a smaller value between an upper-limit transmission power and a target transmission power, where the target transmission power is a sum of multiple power control components, with a target amount of adjustment being one of the multiple power control components.

In one embodiment, that the target transmission power is equal to a sum of the multiple power control components is for dB domain.

In one embodiment, in terms of dB, the target transmission power is equal to a sum of the multiple power control components.

In one embodiment, a power control component among the multiple power control components is measured in dBm or dB.

In one embodiment, the upper-limit transmission power is default.

In one embodiment, the upper-limit transmission power is configurable.

In one embodiment, the upper-limit transmission power is configured by a higher-layer signaling.

In one embodiment, the upper-limit transmission power is configured by an RRC signaling.

In one embodiment, the upper-limit transmission power is a configured maximum output power.

In one embodiment, the upper-limit transmission power is provided for a PUCCH transmission occasion.

In one embodiment, the upper-limit transmission power is a configured maximum output power for a single-carrier UE.

In one embodiment, a symbol indicating the upper-limit transmission power includes $P_{\text{CMAX},f,c}$.

In one embodiment, the upper-limit transmission power is measured in dBm.

In one embodiment, the upper-limit transmission power is measured in Watts (W).

In one embodiment, the upper-limit transmission power is measured in milli-Watts (mW).

In one embodiment, the first transmission power is equal to min{upper-limit transmission power, target transmission power}.

In one embodiment, the first transmission power is equal to a smaller value between an upper-limit transmission power and a target transmission power, where the target transmission power is linear with the target amount of adjustment, and the upper-limit transmission power is default or configurable.

In one embodiment, the target transmission power is linear with the target amount of adjustment.

In one embodiment, the linear relation between the target transmission power and the target amount of adjustment refers to that the target transmission power and the target amount of adjustment are linear with each other in dB domain.

In one embodiment, the linear relation between the target transmission power and the target amount of adjustment refers to that the target transmission power and the target amount of adjustment are linear with each other in terms of dB.

In one embodiment, the target transmission power is measured in dBm, and the target amount of adjustment is measured in dB.

In one embodiment, the target transmission power is equal to a sum of a target amount of adjustment plus other power control components, where one power control component of the other power control components is configurable or related to the first PUCCH or obtained based on indication.

In one embodiment, in terms of dB, the target transmission power is equal to a sum of multiple power control components, the multiple power control components including the target amount of adjustment and other power control components, the other power control components including at least one of a first power control component, a second power control component, a third power control component, a fourth power control component or a fifth power control component.

In one embodiment, the target transmission power is equal to a sum of multiple power control components, the multiple power control components including the target amount of adjustment and other power control components, the other power control components including at least one of a first power control component, a second power control component, a third power control component, a fourth power control component or a fifth power control component.

In one embodiment, the first transmission power is equal to a smaller value between an upper-limit transmission power and a target transmission power, where the target transmission power is a product of multiple power control components, with the target amount of adjustment in the present application being one of the multiple power control components; the upper-limit transmission power is default or configurable.

In one embodiment, the first transmission power is equal to a smaller value between an upper-limit transmission power and a target transmission power, where the target transmission power is directly proportional to the target amount of adjustment, and the upper-limit transmission power is default or configurable.

In one embodiment, the target transmission power is equal to a product of multiple power control components, the multiple power control components including the target amount of adjustment and other power control components, the other power control components including at least one of a first power control component, a second power control component, a third power control component, a fourth power control component or a fifth power control component.

In one embodiment, the other power control components include at least one power control component.

In one embodiment, the other power control components include multiple power control components.

In one embodiment, one of the other power control components is defined in 3GPP TS38.213, Section 7.2.1.

In one embodiment, the other power control components include at least one of a first power control component, a second power control component, a third power control component, a fourth power control component or a fifth power control component.

In one embodiment, the target transmission power is equal to a sum of the target amount of adjustment, a first power control component, a second power control component, a third power control component, a fourth power control component and a fifth power control component.

In one embodiment, a pO-nominal field is used for configuring the first power control component.

In one embodiment, a P0-PUCCH field is used for configuring the first power control component.

In one embodiment, a p0-PUCCH-Value field is used for configuring the first power control component.

In one embodiment, the first power control component is equal to 0.

In one embodiment, the first power control component is measured in dBm.

In one embodiment, the first power control component is measured in Watts (W).

In one embodiment, the first power control component is measured in milli-Watts (mW).

In one embodiment, symbols in which the first power control component is expressed include $P_{O\_PUCCH,b,f,c}$.

In one embodiment, symbols in which the first power control component is expressed include O_PUCCH.

In one embodiment, the first power control component is equal to a sum of two sub-components, of which any component is a default value or configured by an RRC signaling.

In one embodiment, the first power control component is equal to a sum of two sub-components, of which one is a pO-PUCCH-Value or equal to 0 and the other is configured in a pO-nominal field or equal to OdBm.

In one embodiment, the first power control component is configurable.

In one embodiment, the first PUCCH is used to determine the second power control component.

In one embodiment, frequency-domain resources occupied by the first PUCCH are used to determine the second power control component.

In one embodiment, the second power control component is equal to $10 \times \log_{10}(2^{\wedge}\mu \times M_{RB})$, the $M_{RB}$ being equal to the number of resource blocks included in frequency domain by all or part of the PUCCH resources to which the resource occupied by the first PUCCH belongs, the $\mu$ being a Subcarrier spacing (SCS) configuration.

In one embodiment, the second power control component is equal to $10 \times \log_{10}(2^{\wedge}\mu \times M_{RB})$, the $M_{RB}$ being equal to the number of resource blocks included in frequency domain by the resource occupied by the first PUCCH, the $\mu$ being a Subcarrier spacing (SCS) configuration.

In one embodiment, the second power control component is equal to $2^{\mu} \times M_{RB}$, the $M_{RB}$ being equal to the number of resource blocks included in frequency domain by the resource occupied by the first PUCCH, the $\mu$ being a Subcarrier spacing (SCS) configuration.

In one embodiment, $\mu$ is configurable.

In one embodiment, the third power control component is a downlink pathloss estimate.

In one embodiment, the third power control component is measured in dB.

In one embodiment, the third power control component is obtained by calculation based on a measurement for a reference signal.

In one embodiment, symbols in which the third power control component is expressed include $PL_{b,f,c}$.

In one embodiment, symbols in which the third power control component is expressed include PL.

In one embodiment, the third power control component is measured in Watts (W).

In one embodiment, the third power control component is measured in milli-Watts (mW).

In one embodiment, the fourth power control component is one of a value of deltaF-PUCCH-f2, a value of deltaF-PUCCH-f3, a value of deltaF- PUCCH-f4 or 0.

In one embodiment, the fourth power control component is equal to a default value or is configured by an RRC signaling.

In one embodiment, the fourth power control component is related to a PUCCH format.

In one embodiment, the fourth power control component is related to a PUCCH format used by the first PUCCH.

In one embodiment, the first PUCCH uses one of PUCCH format 2 or PUCCH format 3 or PUCCH format 4; when the first PUCCH uses PUCCH format 2, the fourth power control component is the value of deltaF-PUCCH-f2 or 0; when the first PUCCH uses PUCCH format 3, the fourth power control component is the value of deltaF-PUCCH-f3 or 0; when the first PUCCH uses PUCCH format 4, the fourth power control component is the value of deltaF- PUCCH-f4 or 0.

In one embodiment, symbols in which the fourth power control component is expressed include $\Delta_{F\_PUCCH}$.

In one embodiment, symbols in which the fourth power control component is expressed include F_PUCCH.

In one embodiment, the fifth power control component is a PUCCH power control adjustment state.

In one embodiment, the fifth power control component is obtained based on an indication by a TPC field in a DCI format.

In one embodiment, the fifth power control component is determined based on a Transmission power control (TPC) command.

In one embodiment, a value of the fifth power control component is for a PUCCH transmission occasion corresponding to the first PUCCH.

In one embodiment, a field of TPC command for scheduled PUCCH in the first signaling is used to determine the fifth power control component.

In one embodiment, in terms of dB, the fifth power control component is linear with a value indicated by a field of TPC command for scheduled PUCCH in the first signaling.

In one embodiment, symbols in which the fifth power control component is expressed include $g_{b,f,c}$.

In one embodiment, symbols in which the target amount of adjustment is expressed include $\Delta$.

In one embodiment, symbols in which the target amount of adjustment is expressed include $\Delta_{TF,b,f,c}$.

In one embodiment, one of a PUCCH format 2 or a PUCCH format 3 or a PUCCH format 4 is used for the first PUCCH.

In one embodiment, one of a PUCCH format 3 or a PUCCH format 4 is used for the first PUCCH.

In one embodiment, the first PUCCH also occupies a code-domain resource.

### Embodiment 15

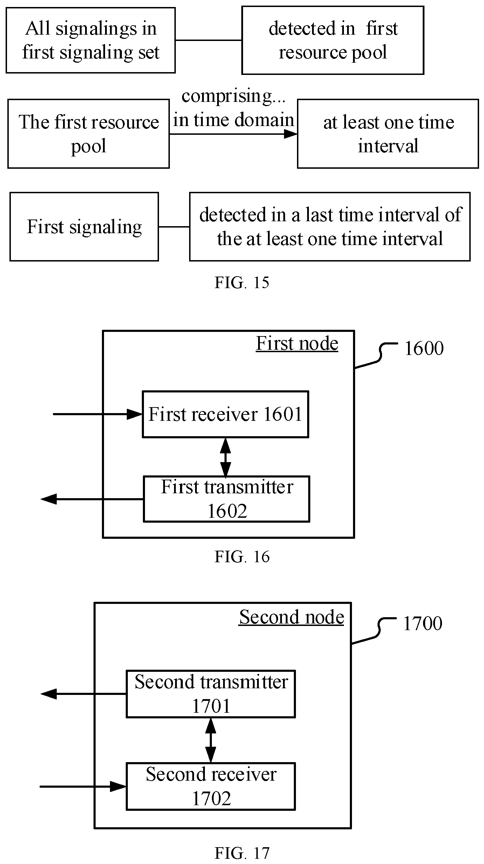

Embodiment 15 illustrates a schematic diagram explaining a first signaling according to one embodiment of the present application, as shown in FIG. 15.

In Embodiment 15, all signalings in a first signaling set are detected in a first resource pool, the first resource pool comprising at least one time interval in time domain; the first signaling is one signaling of the first signaling set, and the first signaling is detected in a last time interval of the at least one time interval.

In one embodiment, the first signaling set comprises at least one DCI format.

In one embodiment, the first resource pool comprises multiple time intervals in time domain.

In one embodiment, all signalings in the first signaling set are detected in a first resource pool, the first resource pool comprising multiple time intervals in time domain; the first signaling is detected in a last time interval of the multiple time intervals.

In one embodiment, the multiple time intervals correspond to different indexes, respectively, and a last time interval of the multiple time intervals is the time interval corresponding to a largest index among the multiple time intervals.

In one embodiment, a last time interval of the multiple time intervals is the time interval with a latest start time among the multiple time intervals.

In one embodiment, the multiple time intervals are respectively multiple PDCCH monitoring occasions, and a last time interval of the multiple time intervals is the PDCCH monitoring occasion associated with a search space set with a latest start time among the multiple time intervals.

In one embodiment, the first node is configured with multiple serving cells, the first field being a total DAI field.

In one embodiment, the first resource pool comprises at least one time interval in time domain, and comprises at least one serving cell in frequency domain.

In one embodiment, the first resource pool comprises resources identified by at least one {serving cell, time interval}-pair.

In one embodiment, the first resource pool comprises at least one time interval on at least one serving cell.

In one embodiment, one of the time intervals in the present application is a PDCCH (i.e., Physical downlink control channel) monitoring occasion.

In one embodiment, one of the time intervals in the present application comprises at least one time-domain symbol.

**Embodiment 16**

Embodiment 16 illustrates a structure block diagram of a processing device in a first node, as shown in FIG. 16. In FIG. 16, a first node processing device 1600 comprises a first receiver 1601 and a first transmitter 1602.

In one embodiment, the first node 1600 is a UE.

In one embodiment, the first node 1600 is a relay node.

In one embodiment, the first node 1600 is vehicle-mounted communication equipment.

In one embodiment, the first node 1600 is a UE supporting V2X communications.

In one embodiment, the first node 1600 is a relay node supporting V2X communications.

In one embodiment, the first node 1600 is a UE supporting high-frequency communications.

In one embodiment, the first node 1600 is a relay node supporting high-frequency communications.

In one embodiment, the first receiver 1601 comprises at least one of the antenna 452, the receiver 454, the multi-antenna receiving processor 458, the receiving processor 456, the controller/processor 459, the memory 460 or the data source 467 in FIG. 4 of the present application.

In one embodiment, the first receiver 1601 comprises at least the first five of the antenna 452, the receiver 454, the multi-antenna receiving processor 458, the receiving processor 456, the controller/processor 459, the memory 460 and the data source 467 in FIG. 4 of the present application.

In one embodiment, the first receiver 1601 comprises at least the first four of the antenna 452, the receiver 454, the multi-antenna receiving processor 458, the receiving processor 456, the controller/processor 459, the memory 460 and the data source 467 in FIG. 4 of the present application.

In one embodiment, the first receiver 1601 comprises at least the first three of the antenna 452, the receiver 454, the multi-antenna receiving processor 458, the receiving processor 456, the controller/processor 459, the memory 460 and the data source 467 in FIG. 4 of the present application.

In one embodiment, the first receiver 1601 comprises at least the first two of the antenna 452, the receiver 454, the multi-antenna receiving processor 458, the receiving processor 456, the controller/processor 459, the memory 460 and the data source 467 in FIG. 4 of the present application.

In one embodiment, the first transmitter 1602 comprises at least one of the antenna 452, the transmitter 454, the multi-antenna transmitting processor 457, the transmitting processor 468, the controller/processor 459 the memory 460 or the data source 467 in FIG. 4 of the present application.

In one embodiment, the first transmitter 1602 comprises at least the first five of the antenna 452, the transmitter 454, the multi-antenna transmitting processor 457, the transmitting processor 468, the controller/processor 459 the memory 460 and the data source 467 in FIG. 4 of the present application.

In one embodiment, the first transmitter 1602 comprises at least the first four of the antenna 452, the transmitter 454, the multi-antenna transmitting processor 457, the transmitting processor 468, the controller/processor 459 the memory 460 and the data source 467 in FIG. 4 of the present application.

In one embodiment, the first transmitter 1602 comprises at least the first three of the antenna 452, the transmitter 454, the multi-antenna transmitting processor 457, the transmitting processor 468, the controller/processor 459 the memory 460 and the data source 467 in FIG. 4 of the present application.

In one embodiment, the first transmitter 1602 comprises at least the first two of the antenna 452, the transmitter 454, the multi-antenna transmitting processor 457, the transmitting processor 468, the controller/processor 459 the memory 460 and the data source 467 in FIG. 4 of the present application.

In one embodiment, the first receiver 1601 receives first information, second information and a first signaling, the first signaling indicating a first time-domain resource pool set, the first time-domain resource pool set comprising multiple time-domain resource pools; the first receiver 1601 receives a first PDSCH group, the first PDSCH group comprising at least one PDSCH; and the first transmitter 1602 transmits a first PUCCH with a first transmission power, the first PUCCH carrying at least one HARQ-ACK bit; herein, a characteristic time-domain resource pool subset consists of at least one time-domain resource pool in the first time-domain resource pool set, the first information being used to determine the characteristic time-domain resource pool subset from the first time-domain resource pool set; each of the time-domain resource pool(s) in the characteristic time-domain resource pool subset comprises time-domain resources occupied by a PDSCH in the first PDSCH group; the first signaling comprises a first DAI field, and a value of the first DAI field in the first signaling and a first value are used together to determine the first transmission power, the first value being a positive integer; the second information is used to determine whether the first value is related to distribution of the time-domain resource pool(s) in the characteristic time-domain resource pool subset among the first time-domain resource pool set.

In one embodiment, the second information is used to indicate a third value, the third value being a positive integer; when the third value is no greater than a reference value, the first value is equal to 1; when the third value is greater than a reference value, the distribution of the time-domain resource pool(s) in the characteristic time-domain resource pool subset among the first time-domain resource pool set and the third value are used together to determine the first value; the reference value is a positive integer.

In one embodiment, when the third value is greater than the reference value: the third value is used to determine multiple time-domain resource pool subsets from the first time-domain resource pool set, among the multiple time-domain resource pool subsets each time-domain resource pool subset comprising at least one time-domain resource pool in the first time-domain resource pool set, the first value being equal to a number of time-domain resource pool subset(s) each comprising at least one time-domain resource pool belonging to the characteristic time-domain resource pool subset among the multiple time-domain resource pool subsets.

In one embodiment, when the third value is greater than the reference value: the first value is equal to a smallest one of the number of time-domain resource pool(s) included in the characteristic time-domain resource pool subset and the third value.

In one embodiment, the first information is used to determine types of time-domain symbols; when a given time-domain resource pool in the first time-domain resource pool set has an overlap with at least one time-domain symbol of which the type is uplink symbol, the given time-domain resource pool does not belong to the characteristic time-domain resource pool subset.

In one embodiment, the first information is used to determine types of time-domain symbols; when a given time-domain resource pool in the first time-domain resource pool set comprises at least one time-domain symbol of which the type is uplink symbol, the given time-domain resource pool does not belong to the characteristic time-domain resource pool subset.

In one embodiment, a target bit number is used to determine the first transmission power, the value of the first DAI field in the first signaling and the first value being used together to determine the target bit number.

In one embodiment, the target bit number is used to determine a target amount of adjustment, the target amount of adjustment being used to determine a target transmission power, the first transmission power being equal to a smaller value between an upper-limit transmission power and the target transmission power, the upper-limit transmission power being default or configurable.

In one embodiment, the first receiver 1601 receives first information, second information and a first signaling, the first signaling indicating a first time-domain resource pool set, the first time-domain resource pool set comprising multiple time-domain resource pools; the first receiver 1601 receives a first PDSCH group, the first PDSCH group comprising at least one PDSCH; and the first transmitter 1602 transmits a first PUCCH with a first transmission power, the first PUCCH carrying at least one HARQ-ACK bit; herein, for a given time-domain resource pool in the first time-domain resource pool set, the first information is used to determine whether the first PDSCH group comprises a PDSCH corresponding to the given time-domain resource pool; the first signaling comprises a first DAI field, the value of the first DAI field in the first signaling and a first value being used together to determine the first transmission power, the first value being a positive integer; the second information is used to determine whether the first value is related to a number of PDSCH(s) included in the first PDSCH group.

In one embodiment, the second information is used to indicate a third value, the third value being a positive integer; when the third value is no greater than a reference value, the first value is equal to 1; when the third value is greater than a reference value, a number of PDSCH(s) included in the first PDSCH group and the third value are used together to determine the first value; the reference value is a positive integer.

In one embodiment, when the third value is greater than the reference value: the first value is equal to a smaller one of the number of PDSCH(s) included in the first PDSCH group and the third value.

In one embodiment, the first information is used to determine types of time-domain symbols; when a given time-domain resource pool in the first time-domain resource pool set has an overlap with at least one time-domain symbol of which the type is uplink symbol, the first PDSCH group does not include a PDSCH corresponding to the given time-domain resource pool.

In one embodiment, the first information is used to determine types of time-domain symbols; when a given time-domain resource pool in the first time-domain resource pool set comprises at least one time-domain symbol of which the type is uplink symbol, the first PDSCH group does not include a PDSCH corresponding to the given time-domain resource pool.

In one embodiment, a target bit number is used to determine the first transmission power, the value of the first DAI field in the first signaling and the first value being used together to determine the target bit number.

In one embodiment, the target bit number is used to determine a target amount of adjustment, the target amount of adjustment being used to determine a target transmission power, the first transmission power being equal to a smaller value between an upper-limit transmission power and the target transmission power, the upper-limit transmission power being default or configurable.

In one embodiment, the first receiver 1601 receives first information, second information and a first signaling, the first signaling indicating a first time-domain resource pool set, the first time-domain resource pool set comprising multiple time-domain resource pools; the first receiver 1601 receives a first PDSCH group, the first PDSCH group comprising at least one PDSCH; and the first transmitter 1602 transmits a first PUCCH with a first transmission power, the first PUCCH carrying at least one HARQ-ACK bit; herein, for a given time-domain resource pool in the first time-domain resource pool set, the first information is used to determine whether the first PDSCH group comprises a PDSCH corresponding to the given time-domain resource pool; the first signaling comprises a first DAI field, the value of the first DAI field in the first signaling and a first value being used together to determine a target bit number; the target bit number being used to determine a target amount of adjustment, the target amount of adjustment being used to determine a target transmission power, the first transmission power being equal to a smaller value between an upper-limit transmission power and the target transmission power, the upper-limit transmission power being default or configurable, the first value being a positive integer; the second information is used to indicate a third value, the third value being a positive integer; when the third value is no greater than a reference value, the first value is equal to 1; when the third value is greater than the reference value, the first value is equal to a smallest one of the number of PDSCH(s) included in the first PDSCH group and the third value; the reference value is a positive integer.

In one subembodiment, the first information is used to determine types of time-domain symbols; when a given time-domain resource pool in the first time-domain resource pool set has an overlap with at least one time-domain symbol of which the type is uplink symbol, the first PDSCH group does not include a PDSCH corresponding to the given time-domain resource pool.

In one subembodiment, the first information is used to determine types of time-domain symbols; when a given time-domain resource pool in the first time-domain resource pool set comprises at least one time-domain symbol of which the type is uplink symbol, the first PDSCH group does not include a PDSCH corresponding to the given time-domain resource pool.

## Embodiment 17

Embodiment 17 illustrates a structure block diagram a processing device in a second node according to one embodiment of the present application, as shown in FIG. 17. In FIG. 17, a second node processing device 1700 comprises a second transmitter 1701 and a second receiver 1702.

In one embodiment, the second node 1700 is a UE.

In one embodiment, the second node 1700 is a base station.

In one embodiment, the second node 1700 is a relay node.

In one embodiment, the second node 1700 is vehicle-mounted communication equipment.

In one embodiment, the second node 1700 is UE supporting V2X communications.

In one embodiment, the second transmitter 1701 comprises at least one of the antenna 420, the transmitter 418, the multi-antenna transmitting processor 471, the transmitting processor 416, the controller/processor 475 or the memory 476 in FIG. 4 of the present application.

In one embodiment, the second transmitter 1701 comprises at least the first five of the antenna 420, the transmitter 418, the multi-antenna transmitting processor 471, the transmitting processor 416, the controller/processor 475 and the memory 476 in FIG. 4 of the present application.

In one embodiment, the second transmitter 1701 comprises at least the first four of the antenna 420, the transmitter 418, the multi-antenna transmitting processor 471, the transmitting processor 416, the controller/processor 475 and the memory 476 in FIG. 4 of the present application.

In one embodiment, the second transmitter 1701 comprises at least the first three of the antenna 420, the transmitter 418, the multi-antenna transmitting processor 471, the transmitting processor 416, the controller/processor 475 and the memory 476 in FIG. 4 of the present application.

In one embodiment, the second transmitter 1701 comprises at least the first two of the antenna 420, the transmitter 418, the multi-antenna transmitting processor 471, the transmitting processor 416, the controller/processor 475 and the memory 476 in FIG. 4 of the present application.

In one embodiment, the second receiver 1702 comprises at least one of the antenna 420, the receiver 418, the multi-antenna receiving processor 472, the receiving processor 470, the controller/processor 475 or the memory 476 in FIG. 4 of the present application.

In one embodiment, the second receiver 1702 comprises at least the first five of the antenna 420, the receiver 418, the multi-antenna receiving processor 472, the receiving processor 470, the controller/processor 475 and the memory 476 in FIG. 4 of the present application.

In one embodiment, the second receiver 1702 comprises at least the first four of the antenna 420, the receiver 418, the multi-antenna receiving processor 472, the receiving processor 470, the controller/processor 475 and the memory 476 in FIG. 4 of the present application.

In one embodiment, the second receiver 1702 comprises at least the first three of the antenna 420, the receiver 418, the multi-antenna receiving processor 472, the receiving processor 470, the controller/processor 475 and the memory 476 in FIG. 4 of the present application.

In one embodiment, the second receiver 1702 comprises at least the first two of the antenna 420, the receiver 418, the multi-antenna receiving processor 472, the receiving processor 470, the controller/processor 475 and the memory 476 in FIG. 4 of the present application.

In one embodiment, the second transmitter 1701 transmits first information, second information and a first signaling, the first signaling indicating a first time-domain resource pool set, the first time-domain resource pool set comprising multiple time-domain resource pools; the second transmitter 1701 transmits a first PDSCH group, the first PDSCH group comprising at least one PDSCH; and the second receiver 1702 receives a first PUCCH transmitted with a first transmission power, the first PUCCH carrying at least one HARQ-ACK bit; herein, a characteristic time-domain resource pool subset consists of at least one time-domain resource pool in the first time-domain resource pool set, the first information being used to determine the characteristic time-domain resource pool subset from the first time-domain resource pool set; each of the time-domain resource pool(s) in the characteristic time-domain resource pool subset comprises time-domain resources occupied by a PDSCH in the first PDSCH group; the first signaling comprises a first DAI field, and a value of the first DAI field in the first signaling and a first value are used together to determine the first transmission power, the first value being a positive integer; the second information is used to determine whether the first value is related to distribution of the time-domain resource pool(s) in the characteristic time-domain resource pool subset among the first time-domain resource pool set.

In one embodiment, the second information is used to indicate a third value, the third value being a positive integer; when the third value is no greater than a reference value, the first value is equal to 1; when the third value is greater than a reference value, the distribution of the time-domain resource pool(s) in the characteristic time-domain resource pool subset among the first time-domain resource pool set and the third value are used together to determine the first value; the reference value is a positive integer.

In one embodiment, when the third value is greater than the reference value: the third value is used to determine multiple time-domain resource pool subsets from the first time-domain resource pool set, among the multiple time-domain resource pool subsets each time-domain resource pool subset comprising at least one time-domain resource pool in the first time-domain resource pool set, the first value being equal to a number of time-domain resource pool subset(s) each comprising at least one time-domain resource pool belonging to the characteristic time-domain resource pool subset among the multiple time-domain resource pool subsets.

In one embodiment, when the third value is greater than the reference value: the first value is equal to a smallest one of the number of time-domain resource pool(s) included in the characteristic time-domain resource pool subset and the third value.

In one embodiment, the first information is used to determine types of time-domain symbols; when a given time-domain resource pool in the first time-domain resource pool set has an overlap with at least one time-domain symbol of which the type is uplink symbol, the given time-domain resource pool does not belong to the characteristic time-domain resource pool subset.

In one embodiment, the first information is used to determine types of time-domain symbols; when a given time-domain resource pool in the first time-domain resource pool set comprises at least one time-domain symbol of which the type is uplink symbol, the given time-domain resource pool does not belong to the characteristic time-domain resource pool subset.

In one embodiment, a target bit number is used to determine the first transmission power, the value of the first DAI field in the first signaling and the first value being used together to determine the target bit number.

In one embodiment, the target bit number is used to determine a target amount of adjustment, the target amount of adjustment being used to determine a target transmission power, the first transmission power being equal to a smaller value between an upper-limit transmission power and the target transmission power, the upper-limit transmission power being default or configurable.

In one embodiment, the second transmitter 1701 transmits first information, second information and a first signaling, the first signaling indicating a first time-domain resource pool set, the first time-domain resource pool set comprising multiple time-domain resource pools; the second transmitter 1701 transmits a first PDSCH group, the first PDSCH group comprising at least one PDSCH; and the second receiver 1702 receives a first PUCCH transmitted with a first transmission power, the first PUCCH carrying at least one HARQ-ACK bit; herein, for a given time-domain resource pool in the first time-domain resource pool set, the first information is used to determine whether the first PDSCH group comprises a PDSCH corresponding to the given time-domain resource pool; the first signaling comprises a first DAI field, the value of the first DAI field in the first signaling and a first value being used together to determine the first transmission power, the first value being a positive integer; the second information is used to determine whether the first value is related to a number of PDSCH(s) included in the first PDSCH group.

In one embodiment, the second information is used to indicate a third value, the third value being a positive integer; when the third value is no greater than a reference value, the first value is equal to 1; when the third value is greater than a reference value, a number of PDSCH(s) included in the first PDSCH group and the third value are used together to determine the first value; the reference value is a positive integer.

In one embodiment, when the third value is greater than the reference value: the first value is equal to a smaller one of the number of PDSCH(s) included in the first PDSCH group and the third value.

In one embodiment, the first information is used to determine types of time-domain symbols; when a given time-domain resource pool in the first time-domain resource pool set has an overlap with at least one time-domain symbol of which the type is uplink symbol, the first PDSCH group does not include a PDSCH corresponding to the given time-domain resource pool.

In one embodiment, the first information is used to determine types of time-domain symbols; when a given time-domain resource pool in the first time-domain resource pool set comprises at least one time-domain symbol of which the type is uplink symbol, the first PDSCH group does not include a PDSCH corresponding to the given time-domain resource pool.

In one embodiment, a target bit number is used to determine the first transmission power, the value of the first DAI field in the first signaling and the first value being used together to determine the target bit number.

In one embodiment, the target bit number is used to determine a target amount of adjustment, the target amount of adjustment being used to determine a target transmission power, the first transmission power being equal to a smaller value between an upper-limit transmission power and the target transmission power, the upper-limit transmission power being default or configurable.

The ordinary skill in the art may understand that all or part of steps in the above method may be implemented by instructing related hardware through a program. The program may be stored in a computer readable storage medium, for example Read-Only-Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. The present application is not limited to any combination of hardware and software in specific forms. The first node in the present application includes but is not limited to mobile phones, tablet computers, notebooks, network cards, low-consumption equipment, enhanced MTC (eMTC) terminals, NB-IOT terminals, vehicle-mounted communication equipment, aircrafts, airplanes, unmanned aerial vehicles, telecontrolled aircrafts, etc. The second node in the present application includes but is not limited to mobile phones, tablet computers, notebooks, network cards, low-consumption equipment, enhanced MTC (eMTC) terminals, NB-IOT terminals, vehicle-mounted communication equipment, aircrafts, airplanes, unmanned aerial vehicles, telecontrolled aircrafts, etc. The UE or terminal in the present application includes but is not limited to mobile phones, tablet computers, notebooks, network cards, low-consumption equipment, enhanced MTC (eMTC) terminals, NB-IOT terminals, vehicle-mounted communication equipment, aircrafts, airplanes, unmanned aerial vehicles, telecontrolled aircrafts, etc. The base station in the present application includes but is not limited to macro-cellular base stations, micro-cellular base stations, home base stations, relay base station, eNB, gNB, Transmitter Receiver Point (TRP), GNSS, relay satellite, satellite base station, airborne base station, test apparatus, test equipment or test instrument, and other radio communication equipment.

It will be appreciated by those skilled in the art that this disclosure can be implemented in other designated forms without departing from the core features or fundamental characters thereof. The currently disclosed embodiments, in any case, are therefore to be regarded only in an illustrative, rather than a restrictive sense. The scope of invention shall be determined by the claims attached, rather than according to previous descriptions, and all changes made with equivalent meaning are intended to be included therein.

**Claims**

1. A first node for wireless communications, comprising:

   a first receiver, receiving first information, second information and a first signaling, the first signaling indicating a first time-domain resource pool set, the first time-domain resource pool set comprising multiple time-domain resource pools;
   the first receiver, receiving a first PDSCH group, the first PDSCH group comprising at least one PDSCH; and
   a first transmitter, transmitting a first PUCCH with a first transmission power, the first PUCCH carrying at least one HARQ-ACK bit;
   wherein a characteristic time-domain resource pool subset consists of at least one time-domain resource pool in the first time-domain resource pool set, the first information being used to determine the characteristic time-domain resource pool subset from the first time-domain resource pool set; each of the time-domain resource pool(s) in the characteristic time-domain resource pool subset comprises time-domain resources occupied by a PDSCH in the first PDSCH group; the first signaling comprises a first DAI field, and a value of the first DAI field in the first signaling and a first value are used together to determine the first transmission power, the first value being a positive integer; the second information is used to determine whether the first value is related to distribution of the time-domain resource pool(s) in the characteristic time-domain resource pool subset among the first time-domain resource pool set.

2. The first node according to claim 1, **characterized**

**in that** the second information is used to indicate a third value, the third value being a positive integer; when the third value is no greater than a reference value, the first value is equal to 1; when the third value is greater than a reference value, the distribution of the time-domain resource pool(s) in the characteristic time-domain resource pool subset among the first time-domain resource pool set and the third value are used together to determine the first value; the reference value is a positive integer;

     or **characterized in that** the second information is used to determine whether the first value is related to distribution of the time-domain resource pool(s) in the characteristic time-domain resource pool subset among the first time-domain resource pool set, comprising that the second information is used to indicate a third value, the third value being a positive integer; when the third value is no greater than a reference value, the first value is equal to 1; when the third value is greater than a reference value, the distribution of the time-domain resource pool(s) in the characteristic time-domain resource pool subset among the first time-domain resource pool set and the third value are used together to determine the first value; the reference value is a positive integer.

3. The first node according to claim 2, **characterized in that** when the third value is greater than the reference value: the third value is used to determine multiple time-domain resource pool subsets from the first time-domain resource pool set, among the multiple time-domain resource pool subsets each time-domain resource pool subset comprising at least one time-domain resource pool in the first time-domain resource pool set, the first value being equal to a number of time-domain resource pool subset(s) each comprising at least one time-domain resource pool belonging to the characteristic time-domain resource pool subset among the multiple time-domain resource pool subsets;

     or **characterized in that** the distribution of the time-domain resource pool(s) in the characteristic time-domain resource pool subset among the first time-domain resource pool set and the third value are used together to determine the first value, comprising that the third value is used to determine multiple time-domain resource pool subsets from the first time-domain resource pool set, among the multiple time-domain resource pool subsets each time-domain resource pool subset comprising at least one time-domain resource pool in the first time-domain resource pool set, the first value being equal to a number of time-domain resource pool subset(s) each comprising at least one time-domain resource pool belonging to the characteristic time-domain resource pool subset among the multiple time-domain resource pool subsets.

4. The first node according to claim 3, **characterized in that** the distribution of the time-domain resource pool(s) in the characteristic time-domain resource pool subset among the first time-domain resource pool set comprises:
to which time-domain resource pool subset(s) of the multiple time-domain resource pool subsets the time-domain resource pool(s) included in the characteristic time-domain resource pool subset respectively belongs(belong).

5. The first node according to any of claims 2-4, **characterized in that** the reference value is 1.

6. The first node according to claim 2, **characterized in that** when the third value is greater than the reference value: the first value is equal to a smallest one of the number of time-domain resource pool(s) included in the characteristic time-domain resource pool subset and the third value.

7. The first node according to any of claims 1-6, **characterized in that** the first information is used to determine types of time-domain symbols; when a given time-domain resource pool in the first time-domain resource pool set has an overlap with at least one time-domain symbol of which the type is uplink symbol, the given time-domain resource pool does not belong to the characteristic time-domain resource pool subset.

8. The first node according to any of claims 1-7, **characterized in that** the first information is used to indicate types of time-domain symbols; when a given time-domain resource pool in the first time-domain resource pool set does not overlap with any time-domain symbol of which the type is uplink symbol, the given time-domain resource pool belongs to the characteristic time-domain resource pool subset; the given time-domain resource pool is any time-domain resource pool in the first time-domain resource pool set.

9. The first node according to any of claims 1-8, **characterized in that** the first information comprises at least one of tdd-UL-DL-ConfigurationCommon or tdd-UL-DL-ConfigurationDedicated.

10. The first node according to any of claims 1-9, **characterized in that** the second information comprises a numberOfHARQ-BundlingGroups, or, the second information includes at least one of Bundling or Groups in its name.

11. The first node according to any of claims 1-10, **characterized in that**.

12. The first node according to claim 11, **characterized in that** the target bit number is equal to a sum of multiple values, the first value being one of the multiple values.

13. The first node according to claim 11 or 12, **characterized in that** the target bit number is used to determine a target amount of adjustment, the target amount of adjustment being used to determine a target transmission power, the first transmission power being equal to a smaller value between an upper-limit transmission power and the target transmission power, the upper-limit transmission power being default or configurable.

14. The first node according to claim 13, **characterized in that** the target transmission power is equal to a sum of multiple power control components, with the target amount of adjustment being one of the multiple power control components.

15. The first node according to any of claims 11-14, **characterized in that** the first UCI bit number is equal to a sum of multiple UCI bit numbers, with the target bit number being one of the multiple UCI bit numbers, any of the multiple UCI bit numbers being a number of UCI bit(s) of a type; a second amount of calculation is equal to a product of $K_1$ and the first UCI bit number being divided by a first resource size, and the target amount of adjustment = $10 \times \log_{10}$ (the second amount of calculation), where $K_1$ is equal to 6; the first resource size is a number of REs occupied by the first PUCCH.

16. The first node according to any of claims 1-15, **characterized in that** the first signaling indicates at least one Start and length indicator value (SLIV), the at least one SLIV (respectively) corresponding to at least one time-domain resource pool in the first time-domain resource pool set.

17. The first node according to any of claims 1-16, **characterized in that** a total number of UCI bits carried by the first PUCCH is not greater than 11.

18. The first node according to any of claims 1-17, **characterized in that** the first PUCCH carries at least 3 UCI bits.

19. The first node according to any of claims 1-18, **characterized in that** one of a PUCCH format 2 or a PUCCH format 3 or a PUCCH format 4 is used for the first PUCCH.

20. The first node according to any of claims 1-19, **characterized in that** all signalings in a first signaling set are detected in a first resource pool, the first resource pool comprising at least one time interval in time domain; the first signaling is one signaling of the first signaling set, and the first signaling is detected in a last time interval of the at least one time interval; one of the time intervals is a PDCCH (i.e., Physical downlink control channel) monitoring occasion.

21. A second node for wireless communications, comprising:

   a second transmitter, transmitting first information, second information and a first signaling, the first signaling indicating a first time-domain resource pool set, the first time-domain resource pool set comprising multiple time-domain resource pools;
   the second transmitter, transmitting a first PDSCH group, the first PDSCH group comprising at least one PDSCH;
   a second receiver, receiving a first PUCCH transmitted with a first transmission power, the first PUCCH carrying at least one HARQ-ACK bit;
   wherein a characteristic time-domain resource pool subset consists of at least one time-domain resource pool in the first time-domain resource pool set, the first information being used to determine the characteristic time-domain resource pool subset from the first time-domain resource pool set; each of the time-domain resource pool(s) in the characteristic time-domain resource pool subset comprises time-domain resources occupied by a PDSCH in the first PDSCH group; the first signaling comprises a first DAI field, and a value of the first DAI field in the first signaling and a first value are used together to determine the first transmission power, the first value being a positive integer; the second information is used to determine whether the first value is related to distribution of the time-domain resource pool(s) in the characteristic time-domain resource pool subset among the first time-domain resource pool set.

22. The second node according to claim 21, **characterized in that** the second information is used to indicate a third value, the third value being a positive integer; when the third value is no greater than a reference value, the first value is equal to 1; when the third value is greater than a reference value, the distribution of the time-domain resource pool(s) in the characteristic time-domain resource pool subset among the first time-domain resource pool set and the third value are used together to determine the first value; the reference value is a positive integer;

or **characterized in that** the second information is used to determine whether the first value is related to distribution of the time-domain resource pool(s) in the characteristic time-domain resource pool subset among the first time-domain resource pool set, comprising that

the second information is used to indicate a third value, the third value being a positive integer; when the third value is no greater than a reference value, the first value is equal to 1; when the third value is greater than a reference value, the distribution of the time-domain resource pool(s) in the characteristic time-domain resource pool subset among the first time-domain resource pool set and the third value are used together to determine the first value; the reference value is a positive integer.

23. The second node according to claim 22, **characterized in that** when the third value is greater than the reference value: the third value is used to determine multiple time-domain resource pool subsets from the first time-domain resource pool set, among the multiple time-domain resource pool subsets each time-domain resource pool subset comprising at least one time-domain resource pool in the first time-domain resource pool set, the first value being equal to a number of time-domain resource pool subset(s) each comprising at least one time-domain resource pool belonging to the characteristic time-domain resource pool subset among the multiple time-domain resource pool subsets;

or **characterized in that** the distribution of the time-domain resource pool(s) in the characteristic time-domain resource pool subset among the first time-domain resource pool set and the third value are used together to determine the first value, comprising that

the third value is used to determine multiple time-domain resource pool subsets from the first time-domain resource pool set, among the multiple time-domain resource pool subsets each time-domain resource pool subset comprising at least one time-domain resource pool in the first time-domain resource pool set, the first value being equal to a number of time-domain resource pool subset(s) each comprising at least one time-domain resource pool belonging to the characteristic time-domain resource pool subset among the multiple time-domain resource pool subsets.

24. The second node according to claim 23, **characterized in that** the distribution of the time-domain resource pool(s) in the characteristic time-domain resource pool subset among the first time-domain resource pool set comprises: to which time-domain resource pool subset(s) of the multiple time-domain resource pool subsets the time-domain resource pool(s) included in the characteristic time-domain resource pool subset respectively belongs(belong).

25. The second node according to any of claims 22-24, **characterized in that** the reference value is 1.

26. The second node according to claim 22, **characterized in that** when the third value is greater than the reference value: the first value is equal to a smallest one of the number of time-domain resource pool(s) included in the characteristic time-domain resource pool subset and the third value.

27. The second node according to any of claims 21-26, **characterized in that** the first information is used to determine types of time-domain symbols; when a given time-domain resource pool in the first time-domain resource pool set has an overlap with at least one time-domain symbol of which the type is uplink symbol, the given time-domain resource pool does not belong to the characteristic time-domain resource pool subset.

28. The second node according to any of claims 21-27, **characterized in that** the first information is used to indicate types of time-domain symbols; when a given time-domain resource pool in the first time-domain resource pool set does not overlap with any time-domain symbol of which the type is uplink symbol, the given time-domain resource pool belongs to the characteristic time-domain resource pool subset; the given time-domain resource pool is any time-domain resource pool in the first time-domain resource pool set.

29. The second node according to any of claims 21-28, **characterized in that** the first information comprises at least one of tdd-UL-DL-ConfigurationCommon or tdd-UL-DL-ConfigurationDedicated.

30. The second node according to any of claims 21-29, **characterized in that** the second information comprises a numberOfHARQ-BundlingGroups, or, the second information includes at least one of Bundling or Groups in its name.

31. The second node according to any of claims 21-30, **characterized in that** a target bit number is used to determine the first transmission power, the value of the first DAI field in the first signaling and the first value being used together to determine the target bit number.

32. The second node according to claim 31, **characterized in that** the target bit number is equal to a sum of multiple values, the first value being one of the multiple values.

33. The second node according to claim 31 or 32, **characterized in that** the target bit number is used to determine a target amount of adjustment, the target amount of adjustment being used to determine a target transmission power, the first transmission power being equal to a smaller value between an upper-limit transmission power and the target transmission power, the upper-limit transmission power being default or configurable.

34. The second node according to claim 33, **characterized in that** the target transmission power is equal to a sum of multiple power control components, with the target amount of adjustment being one of the multiple power control components.

35. The second node according to any of claims 31-34, **characterized in that** the first UCI bit number is equal to a sum of multiple UCI bit numbers, with the target bit number being one of the multiple UCI bit numbers, any of the multiple UCI bit numbers being a number of UCI bit(s) of a type; a second amount of calculation is equal to a product of $K_1$ and the first UCI bit number being divided by a first resource size, and the target amount of adjustment = $10 \times \log_{10}$ (the second amount of calculation), where $K_1$ is equal to 6; the first resource size is a number of REs occupied by the first PUCCH.

36. The second node according to any of claims 21-35, **characterized in that** the first signaling indicates at least one Start and length indicator value (SLIV), the at least one SLIV (respectively) corresponding to at least one time-domain resource pool in the first time-domain resource pool set.

37. The second node according to any of claims 21-36, **characterized in that** a total number of UCI bits carried by the first PUCCH is not greater than 11.

38. The second node according to any of claims 21-37, **characterized in that** the first PUCCH carries at least 3 UCI bits.

39. The second node according to any of claims 21-38, **characterized in that** one of a PUCCH format 2 or a PUCCH format 3 or a PUCCH format 4 is used for the first PUCCH.

40. The second node according to any of claims 21-39, **characterized in that** all signalings in a first signaling set are detected in a first resource pool, the first resource pool comprising at least one time interval in time domain; the first signaling is one signaling of the first signaling set, and the first signaling is detected in a last time interval of the at least one time interval; one of the time intervals is a PDCCH (i.e., Physical downlink control channel) monitoring occasion.

41. A method in a first node for wireless communications, comprising:

receiving first information, second information and a first signaling, the first signaling indicating a first time-domain resource pool set, the first time-domain resource pool set comprising multiple time-domain resource pools;
receiving a first PDSCH group, the first PDSCH group comprising at least one PDSCH; and
transmitting a first PUCCH with a first transmission power, the first PUCCH carrying at least one HARQ-ACK bit;
wherein a characteristic time-domain resource pool subset consists of at least one time-domain resource pool in the first time-domain resource pool set, the first information being used to determine the characteristic time-domain resource pool subset from the first time-domain resource pool set; each of the time-domain resource pool(s) in the characteristic time-domain resource pool subset comprises time-domain resources occupied by a PDSCH in the first PDSCH group; the first signaling comprises a first DAI field, and a value of the first DAI field in the first signaling and a first value are used together to determine the first transmission power, the first value being a positive integer; the second information is used to determine whether the first value is related to distribution of the time-domain resource pool(s) in the characteristic time-domain resource pool subset among the first time-domain resource pool set.

42. The method in the first node according to claim 41, **characterized in that** the second information is used to indicate a third value, the third value being a positive integer; when the third value is no greater than a reference value, the first value is equal to 1; when the third value is greater than a reference value, the distribution of the time-domain resource pool(s) in the characteristic time-domain resource pool subset among the first time-domain resource pool set and the third value are used together to determine the first value; the reference value is a positive integer;

or **characterized in that** the second information is used to determine whether the first value is related to distribution of the time-domain resource pool(s) in the characteristic time-domain resource pool subset among the first time-domain resource pool set, comprising that the second information is used to indicate a third value, the third value being a positive integer; when the third value is no greater than a reference value, the first value is equal to 1; when the third value is greater than a reference value, the distribution of the time-domain resource pool(s) in the characteristic time-domain resource pool subset among the first time-domain resource pool set and the third value are used together to determine the first value; the reference value is a positive integer.

43. The method in the first node according to claim 42, **characterized in that** when the third value is greater than the reference value: the third value is used to determine multiple time-domain resource pool subsets from the first time-domain resource pool set, among the multiple time-domain resource pool subsets each time-domain resource pool subset comprising at least one time-domain resource pool in the first time-domain resource pool set, the first value being equal to a number of time-domain resource pool subset(s) each comprising at least one time-domain resource pool belonging to the characteristic time-domain resource pool subset among the multiple time-domain resource pool subsets;

or **characterized in that** the distribution of the time-domain resource pool(s) in the characteristic time-domain resource pool subset among the first time-domain resource pool set and the third value are used together to determine the first value, comprising that the third value is used to determine multiple time-domain resource pool subsets from the first time-domain resource pool set, among the multiple time-domain resource pool subsets each time-domain resource pool subset comprising at least one time-domain resource pool in the first time-domain resource pool set, the first value being equal to a number of time-domain resource pool subset(s) each comprising at least one time-domain resource pool belonging to the characteristic time-domain resource pool subset among the multiple time-domain resource pool subsets.

44. The method in the first node according to claim 43, **characterized in that** the distribution of the time-domain resource pool(s) in the characteristic time-domain resource pool subset among the first time-domain resource pool set comprises: to which time-domain resource pool subset(s) of the multiple time-domain resource pool subsets the time-domain resource pool(s) included in the characteristic time-domain resource pool subset respectively belongs(belong).

45. The method in the first node according to any of claims 42-44, **characterized in that** the reference value is 1.

46. The method in the first node according to claim 42, **characterized in that** the first signaling indicates at least one Start and length indicator value (SLIV), the at least one SLIV (respectively) corresponding to at least one time-domain resource pool in the first time-domain resource pool set.

47. The method in the first node according to any of claims 41-46, **characterized in that** the first information is used to determine types of time-domain symbols; when a given time-domain resource pool in the first time-domain resource pool set has an overlap with at least one time-domain symbol of which the type is uplink symbol, the given time-domain resource pool does not belong to the characteristic time-domain resource pool subset.

48. The method in the first node according to any of claims 41-47, **characterized in that** the first information is used to indicate types of time-domain symbols; when a given time-domain resource pool in the first time-domain resource pool set does not overlap with any time-domain symbol of which the type is uplink symbol, the given time-domain resource pool belongs to the characteristic time-domain resource pool subset; the given time-domain resource pool is any time-domain resource pool in the first time-domain resource pool set.

49. The method in the first node according to any of claims 41-48, **characterized in that** the first information comprises at least one of tdd-UL-DL-ConfigurationCommon or tdd-UL-DL-ConfigurationDedicated.

50. The method in the first node according to any of claims 41-49, **characterized in that** the second information comprises a numberOfHARQ-BundlingGroups, or, the second information includes at least one of Bundling or Groups in its name.

51. The method in the first node according to any of claims 41-50, **characterized in that** a target bit number is used to determine the first transmission power, the value of the first DAI field in the first signaling and the first value being used together to determine the target bit number.

52. The method in the first node according to claim 51, **characterized in that** the target bit number is equal to a sum of multiple values, the first value being one of the multiple values.

53. The method in the first node according to claim 51 or 52, **characterized in that** the target bit number is used to determine a target amount of adjustment, the target amount of adjustment being used to determine a target transmission power, the first transmission power being equal to a smaller value between an upper-limit transmission power and the target transmission power, the upper-limit transmission power being default or configurable.

54. The method in the first node according to claim 53, **characterized in that** the target transmission power is equal to a sum of multiple power control components, with the target amount of adjustment being one of the multiple power control components.

55. The method in the first node according to any of claims 51-54, **characterized in that** the first UCI bit number is equal to a sum of multiple UCI bit numbers, with the target bit number being one of the multiple UCI bit numbers, any of the multiple UCI bit numbers being a number of UCI bit(s) of a type; a second amount of calculation is equal to a product of $K_1$ and the first UCI bit number being divided by a first resource size, and the target amount of adjustment = $10 \times \log_{10}$ (the second amount of calculation), where $K_1$ is equal to 6; the first resource size is a number of REs occupied by the first PUCCH.

56. The method in the first node according to any of claims 41-55, **characterized in that** the first signaling indicates at least one Start and length indicator value (SLIV), the at least one SLIV (respectively) corresponding to at least one time-domain resource pool in the first time-domain resource pool set.

57. The method in the first node according to any of claims 41-56, **characterized in that** a total number of UCI bits carried by the first PUCCH is not greater than 11.

58. The method in the first node according to any of claims 41-57, **characterized in that** the first PUCCH carries at least 3 UCI bits.

59. The method in the first node according to any of claims 41-58, **characterized in that** one of a PUCCH format 2 or a PUCCH format 3 or a PUCCH format 4 is used for the first PUCCH.

60. The method in the first node according to any of claims 41-59, **characterized in that** all signalings in a first signaling set are detected in a first resource pool, the first resource pool comprising at least one time interval in time domain; the first signaling is one signaling of the first signaling set, and the first signaling is detected in a last time interval of the at least one time interval; one of the time intervals is a PDCCH (i.e., Physical downlink control channel) monitoring occasion.

61. A method in a second node for wireless communications, comprising:

transmitting first information, second information and a first signaling, the first signaling indicating a first time-domain resource pool set, the first time-domain resource pool set comprising multiple time-domain resource pools;
transmitting a first PDSCH group, the first PDSCH group comprising at least one PDSCH; and
receiving a first PUCCH transmitted with a first transmission power, the first PUCCH carrying at least one HARQ-ACK bit;
wherein a characteristic time-domain resource pool subset consists of at least one time-domain resource pool in the first time-domain resource pool set, the first information being used to determine the characteristic time-domain resource pool subset from the first time-domain resource pool set; each of the time-domain resource pool(s) in the characteristic time-domain resource pool subset comprises time-domain resources occupied by a PDSCH in the first PDSCH group; the first signaling comprises a first DAI field, and a value of the first DAI field in the first signaling and a first value are used together to determine the first transmission power, the first value being a positive integer; the second information is used to determine whether the first value is related to distribution of the time-domain resource pool(s) in the characteristic time-domain resource pool subset among the first time-domain resource pool set.

62. The method in the second node according to claim 61, **characterized in that** the second information is used to indicate a third value, the third value being a positive integer; when the third value is no greater than a reference value, the first value is equal to 1; when the third value is greater than a reference value, the distribution of the time-domain resource pool(s) in the characteristic time-domain resource pool subset among the first time-domain resource pool set and the third value are used together to determine the first value; the reference value is a positive integer;

or **characterized in that** the second information is used to determine whether the first value is related to distribution of the time-domain resource pool(s) in the characteristic time-domain resource pool subset among the first time-domain resource pool set, comprising that
the second information is used to indicate a third value, the third value being a positive integer; when the third value is no greater than a reference value, the first value is equal to 1; when the third value is greater than a reference value, the distribution of the time-domain resource pool(s) in the characteristic time-domain resource pool subset among the first time-domain resource pool set and the third value are used together to determine the first value; the reference value is a positive integer.

63. The method in the second node according to claim 62, **characterized in that** when the third value is greater than the reference value: the third value is used to determine multiple time-domain resource pool subsets from the first time-domain resource pool set, among the multiple time-domain resource pool subsets each time-domain resource pool subset comprising at least one time-domain resource pool in the first time-domain resource pool set, the first value being equal to a number of time-domain resource pool subset(s) each comprising at least one time-domain resource pool belonging to the characteristic time-domain resource pool subset among the multiple time-domain resource pool subsets;

or **characterized in that** the distribution of the time-domain resource pool(s) in the characteristic time-domain resource pool subset among the first time-domain resource pool set and the third value are used together to determine the first value, comprising that the third value is used to determine multiple time-domain resource pool subsets from the first time-domain resource pool set, among the multiple time-domain resource pool subsets each time-domain resource pool subset comprising at least one time-domain resource pool in the first time-domain resource pool set, the first value being equal to a number of time-domain resource pool subset(s) each comprising at least one time-domain resource pool belonging to the characteristic time-domain resource pool subset among the multiple time-domain resource pool subsets.

64. The method in the second node according to claim 63, **characterized in that** the distribution of the time-domain resource pool(s) in the characteristic time-domain resource pool subset among the first time-domain resource pool set comprises: to which time-domain resource pool subset(s) of the multiple time-domain resource pool subsets the time-domain resource pool(s) included in the characteristic time-domain resource pool subset respectively belongs(belong).

65. The method in the second node according to any of claims 62-64, **characterized in that** the reference value is 1.

66. The method in the second node according to claim 62, **characterized in that** the first signaling indicates at least one Start and length indicator value (SLIV), the at least one SLIV (respectively) corresponding to at least one time-domain resource pool in the first time-domain resource pool set.

67. The method in the second node according to any of claims 61-66, **characterized in that** the first information is used to determine types of time-domain symbols; when a given time-domain resource pool in the first time-domain resource pool set has an overlap with at least one time-domain symbol of which the type is uplink symbol, the given time-domain resource pool does not belong to the characteristic time-domain resource pool subset.

68. The method in the second node according to any of claims 61-67, **characterized in that** the first information is used to indicate types of time-domain symbols; when a given time-domain resource pool in the first time-domain resource pool set does not overlap with any time-domain symbol of which the type is uplink symbol, the given time-domain resource pool belongs to the characteristic time-domain resource pool subset; the given time-domain resource pool is any time-domain resource pool in the first time-domain resource pool set.

69. The method in the second node according to any of claims 61-68, **characterized in that** the first information comprises at least one of tdd-UL-DL-ConfigurationCommon or tdd-UL-DL-ConfigurationDedicated.

70. The method in the second node according to any of claims 61-69, **characterized in that** the second information comprises a numberOfHARQ-BundlingGroups, or, the second information includes at least one of Bundling or Groups in its name.

71. The method in the second node according to any of claims 61-70, **characterized in that** a target bit number is used to determine the first transmission power, the value of the first DAI field in the first signaling and the first value being used together to determine the target bit number.

72. The method in the second node according to claim 71, **characterized in that** the target bit number is equal to a sum of multiple values, the first value being one of the multiple values.

73. The method in the second node according to claim 71 or 72, **characterized in that** the target bit number is used to determine a target amount of adjustment, the target amount of adjustment being used to determine a target transmission power, the first transmission power being equal to a smaller value between an upper-limit transmission power and the target transmission power, the upper-limit transmission power being default or configurable.

74. The method in the second node according to claim 73, **characterized in that** the target transmission power is equal to a sum of multiple power control components, with the target amount of adjustment being one of the multiple power control components.

75. The method in the second node according to any of claims 71-74, **characterized in that** the first UCI bit number is equal to a sum of multiple UCI bit numbers, with the target bit number being one of the multiple UCI bit numbers, any of the multiple UCI bit numbers being a number of UCI bit(s) of a type; a second amount of calculation is equal to a product of $K_1$ and the first UCI bit number being divided by a first resource size, and the target amount of adjustment = $10 \times \log_{10}$ (the second amount of calculation), where $K_1$ is equal to 6; the first resource size is a number of REs occupied by the first PUCCH.

76. The method in the second node according to any of claims 61-75, **characterized in that** the first signaling indicates at least one Start and length indicator value (SLIV), the at least one SLIV (respectively) corresponding to at least one time-domain resource pool in the first time-domain resource pool set.

77. The method in the second node according to any of claims 61-76, **characterized in that** a total number of UCI bits carried by the first PUCCH is not greater than 11.

78. The method in the second node according to any of claims 61-77, **characterized in that** the first PUCCH carries at least 3 UCI bits.

79. The method in the second node according to any of claims 61-78, **characterized in that** one of a PUCCH format 2 or a PUCCH format 3 or a PUCCH format 4 is used for the first PUCCH.

80. The method in the second node according to any of claims 61-79, **characterized in that** all signalings in a first signaling set are detected in a first resource pool, the first resource pool comprising at least one time interval in time domain; the first signaling is one signaling of the first signaling set, and the first signaling is detected in a last time interval of the at least one time interval; one of the time intervals is a PDCCH (i.e., Physical downlink control channel) monitoring occasion.

**100**

```
┌─────────────────────────┐
│        First node       │
└─────────────────────────┘
            │
            ▼
┌─────────────────────────┐
│ receiving first information, second │  ── 101
│ information and first signaling     │
└─────────────────────────┘
            │
            ▼
┌─────────────────────────┐
│  receiving first PDSCH group  │  ── 102
└─────────────────────────┘
            │
            ▼
┌─────────────────────────┐
│ transmitting first PUCCH with a │  ── 103
│  first transmission power       │
└─────────────────────────┘
```

FIG. 1

**EPS 200**

```
                              ┌─────┐
                              │ HSS │ ── 220
                              └─────┘
                                 ▲
         NR-RAN                  │
          202                    ▼
                    ┌──────────┐ ── 211   ┌────────────┐ ── 214
┌────┐ ── 201   ┌──────────┐   │ MME/A    │◄────────►│ other MMEs/│
│ UE │◄────────►│ NR NodeB │◄─►│ MF/UPF   │          │ AMFs/UPFs  │
└────┘          └──────────┘   └──────────┘          └────────────┘
                    ▲ 203            ▲
                    │ ── 204         │
                    ▼                ▼
              ┌──────────┐    ┌──────┐ ── 212   ┌──────┐ ── 213   ┌──────────┐ ── 230
              │ other NR │    │ S-GW │◄────────►│ P-GW │◄────────►│ Internet │
              │ Nodes B  │    └──────┘          └──────┘          │ service  │
              └──────────┘                                        └──────────┘
                                   5G-CN/EPC
                                      210
```

FIG. 2

```
        ┌────┐   ◄ Control plane ►              ┌────┐   ◄ User plane ►
        │ L3 │        300                       │    │       350
        │    │  ┌──────────┐ ── 306             │    │  ┌──────────┐ ── 356
        │    │  │   RRC    │                     │    │  │   SDAP   │
   305 ─┤    │  └──────────┘                305 ─┤ L2 │  └──────────┘
        │    │        ▲                          │    │        ▲
        │    │  ┌──────────┐ ── 304              │    │  ┌──────────┐ ── 354
        │    │  │   PDCP   │                     │    │  │   PDCP   │
        │ L2 │  └──────────┘                     │    │  └──────────┘
        │    │        ▲                          │    │        ▲
        │    │  ┌──────────┐ ── 303              │    │  ┌──────────┐ ── 353
        │    │  │   RLC    │                     │    │  │   RLC    │
        │    │  └──────────┘                     │    │  └──────────┘
        │    │        ▲                          │    │        ▲
        │    │  ┌──────────┐ ── 302              │    │  ┌──────────┐ ── 352
        │    │  │   MAC    │                     │    │  │   MAC    │
        │    │  └──────────┘                     │    │  └──────────┘
        │    │        ▲                          │    │        ▲
        │ L1 │  ┌──────────┐ ── 301              │ L1 │  ┌──────────┐ ── 351
        │    │  │   PHY    │                     │    │  │   PHY    │
        └────┘  └──────────┘                     └────┘  └──────────┘
```

FIG. 3

**410**

**471**

**416**

**418**

**420**

**452**

**450**

**457**

**454**

**468**

Transmitting processor

Multi-antenna transmitting processor

Transmitter

Receiver

Transmitter

Receiver

Multi-antenna transmitting processor

Transmitting processor

**475**

**459**

Memory

Controller /processor

Memory

**460**

Data source

**467**

**476**

Receiving processor

Multi-antenna receiving processor

Transmitter

Receiver

Transmitter

Receiver

Controller /processor

Multi-antenna receiving processor

Receiving processor

**470**

**418**

**420**

**452**

**454**

**456**

**472**

**458**

FIG. 4

```
┌─────────────────────┐                              ┌─────────────────────┐
│   Second node U2     │                              │    First node U1    │
└─────────────────────┘                              └─────────────────────┘
          │                                                      │
┌─────────────────────┐                                         │
│ S521.transmitting first │                                     │
│ information and second  │                                     │
│ information             │                                     │
└─────────────────────┘                                         │
          │                                                      │
          ├────first information and second information────────►│
          │                                          ┌─────────────────────────┐
          │                                          │ S511.receiving first information │
          │                                          │ and second information    │
          │                                          └─────────────────────────┘
┌─────────────────────┐                                         │
│ S522.transmitting first │                                     │
│ signaling               │                                     │
└─────────────────────┘                                         │
          │                                                      │
          ├──────────first signaling──────────────────────────►│
          │                                          ┌─────────────────────────┐
          │                                          │ S512.receiving first signaling │
          │                                          └─────────────────────────┘
┌─────────────────────────┐                                     │
│ S523.transmitting first PDSCH │                               │
│ group                         │                               │
└─────────────────────────┘                                     │
          │                                                      │
          ├──────────first PDSCH group──────────────────────►  │
          │                                          ┌─────────────────────────┐
          │                                          │ S513.receiving first PDSCH │
          │                                          │ group                     │
          │                                          └─────────────────────────┘
          │                                          ┌─────────────────────────┐
          │                                          │ S514.transmitting first PUCCH │
          │                                          │ with first transmission power │
          │                                          └─────────────────────────┘
          │◄─────────first PUCCH───────────────────────────────┤
┌─────────────────────────┐                                     │
│ S524.receiving first PUCCH │                                  │
└─────────────────────────┘                                     │
          │                                                      │
       ┌──────┐                                              ┌──────┐
       │ End  │                                              │ End  │
       └──────┘                                              └──────┘
```

FIG. 5

```
                              ◇───────────────◇
  not greater than           ╱                 ╲          greater than
  reference value    ◄──────    S61: Is third value···?  ──────►   reference value
       │                     ╲                 ╱                     │
       ▼                      ◇───────────────◇                      ▼
┌─────────────────────┐                              ┌─────────────────────────────┐
│                     │                              │ S63.the distribution of time-domain │
│                     │                              │ resource pool(s) included in the │
│ S62.First value is  │                              │ characteristic time-domain resource pool │
│ equal to 1          │                              │ subset among the first time-domain │
│                     │                              │ resource pool set is used along with the │
│                     │                              │ third value to determine the first value │
└─────────────────────┘                              └─────────────────────────────┘
```

FIG. 6

time-domain resource
pools in the first time-
domain resource pool set

FIG. 7

First value = min{ the number of time-domain resource pool(s) included in the characteristic time-domain resource pool subset, the third value }

FIG. 8

| First information | used to determine → | Types of time-domain symbols |

| When a given time-domain resource pool in the first time-domain resource pool set has an overlap with at least one time-domain symbol of which the type is uplink symbol | The given time-domain resource pool does not belong to the characteristic time-domain resource pool subset |

FIG. 9

| Second value | ← used to determine — | Value of first DAI field in first signaling |

used to determine ↓

| Target bit number | used to determine → | First transmission power |

FIG. 10

| First value | used to determine | Target bit number | used to determine | First transmission power |

FIG. 11

FIG. 12

FIG. 13

FIG. 14

| All signalings in first signaling set | detected in first resource pool |

| The first resource pool | comprising... in time domain → | at least one time interval |

| First signaling | detected in a last time interval of the at least one time interval |

FIG. 15

First node — 1600

First receiver 1601

First transmitter 1602

FIG. 16

Second node — 1700

Second transmitter 1701

Second receiver 1702

FIG. 17

## INTERNATIONAL SEARCH REPORT

| International application No. |
| --- |
| **PCT/CN2022/133919** |

| A. | CLASSIFICATION OF SUBJECT MATTER |
| --- | --- |

H04W52/00(2009.01)i;H04W72/04(2023.01)i;H04L1/16(2023.01)i

According to International Patent Classification (IPC) or to both national classification and IPC

| B. | FIELDS SEARCHED |
| --- | --- |

Minimum documentation searched (classification system followed by classification symbols)

IPC: H04W52/-, H04W72/-, H04L1/-

Documentation searched other than minimum documentation to the extent that such documents are included in the fields searched

Electronic data base consulted during the international search (name of data base and, where practicable, search terms used)

CNABS, CNTXT, CNKI: 功率, PUCCH, 上行控制信道, PDSCH, 下行共享信道, DCI, 下行, 控制, 信息, 指示, 消息, DAI, 分配, 分配, 指派, 索引, HARQ, 绑定, 数量, 分布; VEN, ENTXT, 3gpp, IEEE: power, PUCCH, PDSCH, DCI, downlink, control, indication, information, DAI, assignment, index, HARQ, bundling, num+, distribut+.

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 111726204 A (BEIJING SAMSUNG TELECOM R&D CENTER et al.) 29 September 2020 (2020-09-29)<br>description, paragraphs [49]-[268] | 1-80 |
| A | CN 113498205 A (SPREADTRUM COMMUNICATIONS (SHANGHAI) CO., LTD.) 12 October 2021 (2021-10-12)<br>entire document | 1-80 |
| A | US 2021314100 A1 (SAMSUNG ELECTRONICS CO., LTD.) 07 October 2021 (2021-10-07)<br>entire document | 1-80 |
| A | Moderator (LG Electronics). "Summary #4 of PDSCH/PUSCH enhancements (Scheduling/HARQ)"<br>*3GPP TSG RAN WG1 #104-e, R1-2102080*, 08 February 2021 (2021-02-08),<br>entire document | 1-80 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 February 2023** | **15 February 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

<div align="center">

**INTERNATIONAL SEARCH REPORT**
**Information on patent family members**

</div>

| International application No. |
| --- |
| **PCT/CN2022/133919** |

| Patent document cited in search report | | | Publication date (day/month/year) | Patent family member(s) | | | Publication date (day/month/year) |
| --- | --- | --- | --- | --- | --- | --- | --- |
| CN | 111726204 | A | 29 September 2020 | WO | 2020197195 | A1 | 01 October 2020 |
| | | | | KR | 20210133310 | A | 05 November 2021 |
| | | | | EP | 3925128 | A1 | 22 December 2021 |
| | | | | EP | 3925128 | A4 | 27 April 2022 |
| | | | | US | 2022095337 | A1 | 24 March 2022 |
| CN | 113498205 | A | 12 October 2021 | None | | | |
| US | 2021314100 | A1 | 07 October 2021 | KR | 20200018141 | A | 19 February 2020 |
| | | | | WO | 2020032490 | A1 | 13 February 2020 |
| | | | | CN | 112753192 | A | 04 May 2021 |

Form PCT/ISA/210 (patent family annex) (July 2022)